(19) Europäisches Patentamt
European Patent Office
Office européen des brevets

(11) **EP 2 451 136 A1**

## (12) EUROPEAN PATENT APPLICATION

(43) Date of publication:
**09.05.2012 Bulletin 2012/19**

(51) Int Cl.:
***H04L 29/08*** (2006.01)   ***H04L 12/56*** (2006.01)

(21) Application number: **10306216.2**

(22) Date of filing: **05.11.2010**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME** | • **Martina, Valentina**<br>  **92443, Issy les Moulineaux cedex (FR)**<br>• **Ioannidis, Efstratios**<br>  **92443, Issy les Moulineaux cedex (FR)**<br>• **Picconi, Fabio**<br>  **92443, Issy les Moulineaux cedex (FR)** |
| (71) Applicant: **Thomson Licensing**<br>  **92130 Issy-les-Moulineaux (FR)** | (74) Representative: **Ruellan-Lemonnier, Brigitte**<br>  **Technicolor**<br>  **European Patent Operations**<br>  **1 Rue Jeanne d'Arc**<br>  **92443 Issy-les-Moulineaux Cedex (FR)** |
| (72) Inventors:<br>• **Massoulie, Laurent**<br>  **92443, Issy les Moulineaux cedex (FR)** | |

## (54) Forwarding messages

(57)   Forwarding a message in a peer-to-peer network. A plurality of peers are aggregated to one another by a hierarchical network, the hierarchical network having a plurality of hierarchical levels, each of the message and the peers having a respective identifier, in which method a selection is made of a receiving peer to which a message from an initiating peer is to be forwarded by a forwarding peer, the initiating peer and the forwarding peer being aggregated with one another at a level of aggregation. The selection is made by determining (i) the similarity between the identifier of the message and the identifier of the receiving peer, and, (ii) whether the receiving peer is aggregated with the initiating peer and with the forwarding peer at the same level of aggregation as that at which the initiating peer and the forwarding peer are aggregated with each other.

FIG.1

EP 2 451 136 A1

**Description**

The present invention relates to the forwarding of messages, in particular the forwarding of message between nodes aggregated to each other in a hierarchical fashion.

Customer nodes, also known as home gateways, are normally installed at residential premises to allow a customer to connect equipment such as a personal computer to the Internet through a hierarchical network of routers. Content can thus be downloaded over the internet from a content provider and stored locally on the user's computer or at the home gateway.

In addition to connecting the gateways, the hierarchical network serves to aggregate groups of gateways. This can aggregation can occur at different levels. For example, gateways in the same neighborhood are aggregated by a DSLAM (Digital Subscriber Line Access Multiplexer). The ISP may deploy tens or hundreds of DSLAMs in a given city, which are interconnected through what is referred to as a MAN (Metropolitan Area Network). Gateways connected to the same DSLAM can be viewed as being aggregated at one level, whilst those connected to different DSLAMs but within the same MAN can be seen as being aggregated at a different level.

Is known to logically connect home gateways together so as to form a so-called peer-to-peer network in which the home gateways, acting as peers, can access content from one another. This reduces the load on the hierarchical network. One known system aims at running ISP-managed peer-to-peer applications on an ISP's gateways. For example, in one known video-on-demand application, films are stored on the local memory drives of gateways in a way that is accessible by other gateways. Consequently, if a home user wishes to view a film, a copy can be retrieved from a nearby gateway rather than from a central server maintained by the ISP. One benefit of this approach is that the need for maintaining large content distribution servers is reduced. In addition traffic load on the ISP's network is reduced. However, it is not always convenient for a given gateway wishing to retrieve data to discover the location of a nearby gateway holding this data. Consequently, the traffic in the hierarchical network of an ISP can be unnecessarily high.

According to one aspect of the present invention, there is provided a method of forwarding a message in a system having a plurality nodes aggregated to one another by a hierarchical network, the hierarchical network having a plurality of hierarchical levels, each of the message and the nodes having a respective identifier, in which method a selection is made of a receiving node to which a message from an initiating node is to be forwarded by a forwarding node, the initiating node and the forwarding node being aggregated with one another at a level of aggregation, the selection being made by determining

    (i) the similarity between the identifier of the message and the identifier of the receiving node, and,

    (ii) whether the receiving node is aggregated with the initiating node and with the forwarding node at the same level of aggregation as that at which the initiating node and the forwarding node are aggregated with each other.

It can then be chosen, where possible, to remain within the same level of aggregation. In such a situation, because the receiving node is aggregated with the initiating node and the forwarding node at the same hierarchical level of aggregation as that at which the initiating node and the forwarding node are aggregated with each other, the likelihood that the message will remain localised is increased. By forwarding the message in a more localised fashion, traffic in the underlying hierarchical network is reduced.

Preferably the selection of receiving node, in particular determining (i) and (ii), is performed at the node. It will be understood that as the message propagates in a stepwise fashion, the node acting as a forwarding node will change. Thus, the forwarding node of one step may be the initiating node of the subsequent step. That is, the method will preferably include the additional steps of (iii) forwarding the message to the receiving node; (iv)designating the receiving node as a forwarding node; (v) selecting the receiving node the message should be next forwarded by determining (i) and (ii); and, (vi) repeating (iii) to (v) so as to route the message along a path.

However, in one embodiment, the initiating node is the source node from which the message originates, and remains the same node as the message propagates through the system of nodes.

Preferably, the message contains a data identifier indicating the data available for download from one of the nodes to another of the nodes, and an identifier for identifying a node in relation to the data. Yet more preferably, said identifier of the message is the identifier of said data. The message may be a lookup message requesting an indication of the location stored data, in which case the identified node will be the node requesting the data, or the message may be a publish message indicating the location of the stored data, in which case the identified node in the message will be the node storing the data.

In a preferred embodiment, the lookup message and the publish message are routed such that their paths come together at at least one common node. The location of the node storing the data can then be transmitted from the common node to the node requesting the data. In one embodiment, the message is forwarded along a path that crosses a domain of nodes having a given level of aggregation at at exit point node. In such an embodiment, the initiating node is the last exit-point from which the message has passed.

The routing of messages preferably includes the step of determining which of the nodes at a given level of aggregation has an identifier with the highest level of similarity to that of said data, and of storing at the so determined node the identifier for said data in association with the identifier of the node storing the data. If a requesting node wishes to retrieve data, the requesting node will then be able to send a message to a hierarchically nearby node. This is preferably achieved by routing a message such that the receiving node is chosen, out of the plurality of other nodes to which the forwarding node is logically connected, as being the node whose identifier is most similar to that of the identifier for said data.

The message is preferably forwarded from node to node until a determination is made that the identifier of said data is more similar to the identifier of the forwarding node than it is to any of the nodes to which the forwarding node is logically connected.

In order to determine the level at which a given node aggregated with the forwarding node, the forwarding node preferably transmits a message from the given node, which message is arranged to cause the given node to respond with a response. The forwarding node can determine the elapsed time between the transmission of the message and receipt of the response at the forwarding node, and from this infer the level of aggregation.

In one embodiment, the nodes are the peers of a peer to peer network, in which case the nodes a connected by logical links, whilst messages between the nodes are carried by the hierarchical network, which provides physical (including possibly wireless) links between the peers.

In another aspect of the invention, there is provided a node for use in forwarding messages through a hierarchical network, said node having: an interface for receiving a message from an initiating node in the network, which message has an identifier associated therewith; a memory stage for storing an identifier associated with said node and for storing respective identifiers for a plurality of other nodes; a processing stage arranged in use to select a node from the plurality of other nodes and to cause the interface to forward the received message to the selected node, the processing stage being arranged to make the selection in dependence on (i) the similarity between on the one hand the respective identifier of the message and on the other hand the respective identifiers of at least some of the plurality of other nodes, and, (ii) a determination of whether the receiving node is aggregated with the initiating node and the forwarding node at the same given hierarchical level of aggregation as that at which the initiating node and the forwarding node are aggregated with each other.

The invention will now be further described, by way of example only, and with reference to the following drawings in which

Figure 1 shows a hierarchical network;

Figure 2 shows a customer node according to one embodiment of the invention;

Figure 3 shows a logical network;

Figure 4 shows a national ISP network;

Figure 5 shows a further logical network; and

Figures 6 to 8 show simulation data.

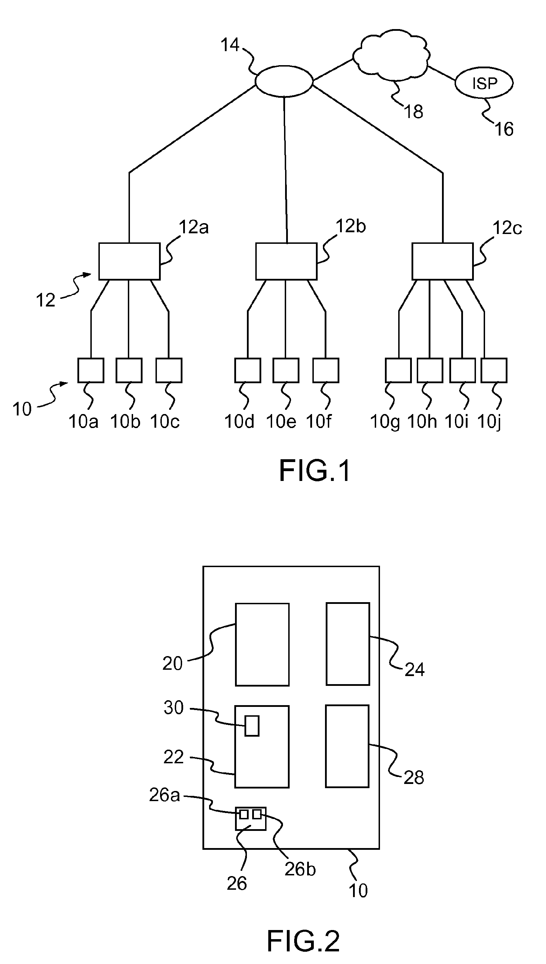

Figure 1 shows a network in which a plurality of customer nodes 10a-10j are connected to a plurality of aggregating nodes 12a-12c which are themselves connected to a router node 14 by physical communication links (these could be electrical or wireless including optical). The network is arranged in a hierarchical fashion in that a first group of customer nodes 10a-10c is connected to a first aggregating node 12a, whilst a second group of customer nodes 10d-10f is connected to a second aggregating node 12b, and a third group of customer nodes 10g-10j is connected to a third aggregating node 12c. The aggregating nodes 12a-12c are connected to a common router node 14, itself connected to an ISP node 16 through a backbone network 18. The nodes can be regarded as being arranged at different levels, the customer nodes being at a zeroth level, whilst the aggregating nodes are at a first level and the router node is at a second level. In the simplified view of Figure 1, the hierarchical arrangement is a branched arrangement, and the first group of customer nodes can be said to be aggregated at the first level since they share a common branch point, here the aggregating node 12a which is located at the first level. In a similar fashion, first, second and third groups of customer nodes are together aggregated at the second level since the common node which they share is the router node 14, located at the second level.

It should be noted however, that the network beyond the router 14 need not be hierarchical, and may be a complex arrangement of cross connected nodes or routers.

One of the customer nodes 10 is shown in Figure 2. The node has a processor stage 20 and a memory stage 22, as well as an interface stage 24 for connecting to the network, these stages 20-24 being implemented in hardware 26 which includes at least one processor 26a connected to at least one memory 26b. The customer node, also referred to as a home gateway, has in addition a customer interface 28 for connecting to customer equipment so as to allow content to be uploaded or downloaded to or from the customer equipment through the hierarchical network. The content will normally be audio-visual content, that is, content that is at least one of video and audio content.

Each customer node has an identifier (ID) associated therewith that is stored by the memory stage 22. The ID of a given node is formed by performing a hash function on the IP address or other descriptor of the node.

Stored within the memory stage 22 is a list, referred to hereinafter as a routing table 30, containing a plurality of identifiers, each identifier corresponding to a respective one of the other customer nodes in the hierarchical network. The identifiers stored at the routing table of a given customer node indicate the identity of the other customer nodes that the given customer node can transmit data to (and receive data from) through the hierarchical network. The routing tables in effect define virtual or logical links between customer nodes. Each node is connected to a plurality of other nodes connected by these logical links, thereby defining an overlay network in which the customer nodes act as peers.

The benefit of such an arrangement is that one customer node can download data stored and made available by another customer node. To allow other customer nodes to know that a given customer node stores a given file, the node storing the file, referred to as the initiating node, transmits a Publish message. The Publish message contains the identifier of the initiating node and an identifier corresponding to the file stored at the initiating node. The identifier for the file is obtained by performing a hash function on file name or other descriptor of the file. The file name or other descriptor of the file can be made available in a catalog provided by the ISP to every node. The Publish message is forwarded over the overlay network using a forwarding algorithm which runs at each customer node. At each given customer node, the forwarding algorithm governs the choice of subsequent customer node the message will be forwarded to, out of the available customer nodes virtually connected to the given node. The forwarding algorithm is repeated at each node until a predetermined condition is met, at which point the Publish message is stored. The node at which this occurs is referred to as a Rendezvous Point node.

When a customer of a given customer node wishes to discover the location of a given file, the customer node, referred to as the requesting node, is arranged to transmit a Lookup message containing the identity of the desired file as well as its own ID. The forwarding algorithm is used to forward the Lookup message from customer node to customer node over the overlay network (in a similar fashion to that used to forward the Publish message), with the result that the Lookup message converges on the Rendezvous point. The Lookup message contains instructions which, when the Rendezvous Point is reached, causes the Rendezvous Point to transmit a message back to the requesting node indicating the identity of the node requesting the desired file. The requesting node can then transmit a request to the node storing the file in order to obtain that file.

The routing algorithm in respect of a given file k operates at a given customer node x as indicated in the following steps performed at the processing stage 20 of a customer node 10.

1. Load the routing table (RT) of the node x, and find all the entries in the routing table that are more similar to the ID of file k than they are to the ID of node x.

2. Of the entries found, determine if there are any within a distance r, where r is the distance of node x from the initiating (source) node of the message.

3. If there are entries corresponding to such nodes, route the message to the node having an ID that is the most similar to that of the file k.

4. If there are no entries in the routing table that are within distance r and are more similar to the ID of k than x, then among all the entries in the routing table that are more similar to the ID of file k than that of x, find the nodes with smallest hierarchical distance from the node x and route the message to the node having an ID that is the most similar to that of the file k. The node x then becomes what is termed an exit point.

5. If there are no entries in the routing table that are more similar to the ID of file k than they are to the ID of node x, then store the message in respect of file k local without forwarding.

Here, distance between two customer nodes is the level of the smallest aggregation group to which they both belong. For instance, two users of the same aggregation node 12 are at distance 1 from one another; two customer nodes connected to different aggregation nodes but to the same router node 14 at are distance 2, so on and so forth. Step 2 is equivalent to determining if there are any nodes amongst the entries of the routing table that are aggregated with the initiating node and the forwarding node x at the same hierarchical level of aggregation as the initiating and forwarding nodes are aggregated with each other.

The IDs are in binary form and are arranged in the routing table such that the ith entry has i leading bits in common with the ID of the node hosting the table, hereinafter referred to as the leading bits rule. This property ensures that a node at which the forwarding terminates is found quickly. Furthermore, of the possible entries that match this requirement, the node having the shortest distance (that is, of distance 1 if possible, or if not of distance 2 etc..) is chosen. If more than one such nodes exist any of them can be chosen.

In order to determine which of the two IDs (say of nodes x and y) is most similar to a third ID (say of message k), the ID of x and the ID of y are each compared to each other bitwise for each bit position from left to right. The bit position at which the first point of difference occurs is taken to indicate which of the two IDs is more similar to the third ID. For example, if k=1111111; x=0011111; and, y=0001111, then x and y differ at bit position 3. At this position, key k has bit 1, so it agrees with x but not with y. Accordingly, x is considered more similar to k than is y. This procedure is implemented in step 1 to determine the entries in the routing table that are more similar to the ID of file k than they are to the ID of node x. The position at which the two IDs differ is just one example of a measure of similarity. Other measures are possible.

Alternatively, and less preferably, the determination of which of two IDs (say for nodes x and y) is most similar to a third ID (say of message k) could be made as follows: the ID of x and the ID of y are each compared with the ID of k bitwise for each bit position from left to right. The bit position at which first point of difference occurs is then taken to indicate the level of similarity. For example, if: k=1111111; x=0011111; and, y=0001111, then k and x differ at bit position 3, giving a similarity value of 3, whereas k and y differ at bit position 4, giving a similarity value of 4. Accordingly, y is considered more similar to k than is x. This procedure is implemented in step 1 to determine the entries in the routing table that are more similar to the ID of file k than they are to the ID of node x. The position at which the two IDs differ is just one example of a measure of similarity.

In more detail, to determine which of the ID has the highest level of similarity, the processor is arranged to perform a first comparison step between the last entry in the routing table and the file ID and second comparison step between the ID of the forwarding node and the file ID. Out of the ID in the routing table and the ID of the forwarding node, the ID with the highest level of similarity with the file ID, is placed in a temporary memory location. The above are then repeated between the so-placed ID and the next entry in the routing table, so on and so forth until the top of the routing table is reached, at which point the ID in the temporary memory location is the closest matching ID to that of the file.

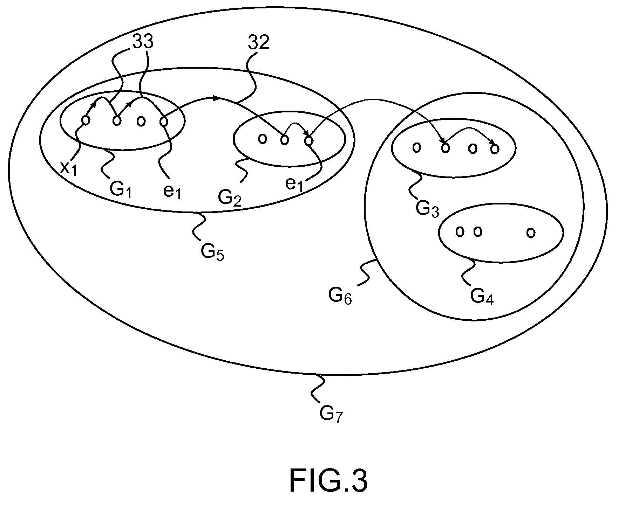

In order to determine which entries amongst those computed at step 1 correspond to nodes within distance r, the forwarding node x is arranged to transmit a respective ping message to each node whose IDs have been so determined. A node receiving a ping message is arranged to respond with a return message. The processing stage initiates a timer routine which starts a timer when the ping message is transmitted and stops the timer when the return message is received. From the round trip time, the forwarding node is able to infer whether the pinged node is within distance r. In another embodiment, the ISP provides all nodes with a list of the level of aggregations at which nodes belong to. For example, node x1 in Figure 3 is provided by the ISP a list of three identifiers each corresponding to levels of aggregation G1,G5 and G7. Each node is provided with such a list. To find their distance, two nodes can share their lists and find the first position that is common in both lists. Other methods are possible

Out of all the possibly entries having i leading bits in common with the ID of the forwarding node, the entry corresponding to the node with the lowest value of distance r is chosen. As a result, the entries in the routing table of a node acting as a forwarding node are those corresponding to nodes with the lowest possible level of aggregation with the forwarding node.

If at step 4 there are no entries in the routing table that are within distance r and are more similar to the ID of k than x, then the node x then becomes what is termed an exit point. That is, the forwarding path leaves a given level of aggregation. If the forwarding algorithm is being run in respect of a Publish message, a copy of the Publish message is stored at the exit point, making the exit point a Rendezvous point. There may thus be a plurality of Rendezvous points in respect of a given file k, one or more of which may be located at the exit points of different domains or groups of aggregation.

In an alternative embodiment, in addition to storing a copy of the Publish message, the exit point places its own ID in the message, replacing the ID of the initiating node. In this embodiment, the initiating node in the message is the last exit point from which the message passed, and an exit point that stores a message forwards this message only if this is the first message pertaining to this file that the exit point stores.

One property of the forwarding algorithm outlined above is that for any given file ID, the path followed by a message being forwarded by the algorithm will leave a given level of aggregation at an exit point that is independent of the starting point of the forwarding path (assuming it does not terminate within that level of aggregation, in which case there will be no exit point). That is, forwarding paths from different starting points leaving a given level of aggregation will leave that level at a common exit point. This can be seen as a consequence of the fact that for each routing table, the entries in that table are chosen where possible as being those within the same level of aggregation, given the leading bits rule mentioned above.

This can be seen in Figure 3, which shows nodes arranged within nested hierarchical groups. Groups G1,G2,G3,G4 are first level groups since they are aggregated at level 1. Groups G5 and G6 are second level groups and are aggregated by a second level aggregating node. The group G7 is aggregated by a third level aggregating node.

If a node x1 transmits a Publish message in respect of file k, the forwarding algorithm operating at each node will cause the message to follow a forwarding path 32 shown in Figure 3. As shown the path performs a plurality of steps, in particular hops 33, as it is forwarded from one node to another node. The hops are between pairs of nodes that a logically connected to one another. A hop between nodes with lowest level of aggregation could be viewed with respect to Figure 1 as involving communication from a first customer node 10a, through to one of the aggregating nodes 12a, and back down to a second customer node 10b, where both the first and second nodes are connected to the same aggregating node. In a hop between nodes with a higher level of aggregation, the message would pass through the router node 14.

The algorithm operating at a given node, here x1, will determine if there is a node matching the aforesaid requirement in G1, that is, whether in G1 there is a customer node whose ID matches the file ID better that the other nodes G1 to which that node is linked. If so, a node in G1 will become a rendezvous node for that node and the forwarding algorithm will terminate. Otherwise, the forwarding algorithm operating at each customer node will define a forwarding path 32 which leaves G1 at node e1, the exit point for G1, and that goes from customer node to customer node until the closest matching node e2 in G5 is found (i.e., having an ID which out of the node in G5 is the best match to the file ID). If the closest matching node is a better match than the others to which it is linked, then the forwarding algorithm terminates and that node becomes the rendezvous point. Otherwise, that node e2 becomes an exit node, and the forwarding algorithm forwards the publishing message to another node outside G5, here in G6. This process repeats until the best matching node in the group G7 (the highest level group) is found, at which point the forwarding algorithm terminates. The terminating node is referred to as the root node.

In an alternative embodiment, the forwarding algorithm terminates when it reaches an exit point that already stores a message pertaining to the same file.

The forwarding algorithm will forward a Lookup message along a forwarding path, that, if it has to leave a given group, will do so at an exit node. The publish message is stored at each exit node, as well as at the rendezvous points and root node. Consequently, the Lookup message will find the corresponding Publish message stored at a node in the same level of aggregation as the node initiating the lookup message, thereby saving bandwidth in the physical network. Thus, for example, if the node initiating a Lookup operation is locate in G1, it will retrieve information on the location of file k from a node that is also in G1.

In another embodiment, the node from which the lookup message receives the location of another exit point that stores a message that contains the key of the file. The node then contacts this exit point, that either contains a similar message, or a message containing a node that stores the file. In the first case the process is repeated. In the second case, the node from which the lookup message originated contacts the node storing the file directly, and retrieves the file.

It should be nodes that functions described above as being carried out at a node may be performed in whole or in part by locally connected equipment such as at least one personal computer.

One way of building a system of customer nodes is to introduce the nodes to the system one at a time. In such as situation, an incoming node populates its routing table as follows. To populate the entry of its routing table that shares the leading i bits with its own identifier (that is, the identifier of the incoming node), the incoming node generates an arbitrary key that shares i bits with the identifier of the incoming node. That is, the first i bits of this key are the same as the first i bits of the identifier of the incoming node, and the i+1th bit of this key differs from the indentifier of the incoming node. Then, the incoming node generates a lookup message for this key. The look up message thus contains the ID of the incoming node, and the generated arbitrary key.

This lookup message is forwarded using the above described forwarding algorithm (instead of a file ID, the arbitrary key is used). The lookup message is forwarded until a node that shares i-bits with the key is found. Once this node is found, the message causes this node to contact the incoming node, and the ID of this node is placed in the i-th entry of the incoming nodes routing table. Because a property of the forwarding algorithm is that it will exhaust the possible nodes in a given level of aggregation before moving to the next level, the node found by the lookup message will be a node aggregated to the incoming node with the lowest level of aggregation possible (out of the possible nodes whose IDs have i leading bits in common with the incoming node.

The lookup message causes the so-found node to transmit a return message with its ID, which ID is interested into the routing table of the incoming node. The incoming node then repeats the procedure for the entry having i+1 leading bits in common with its ID until the routing table of the incoming node is fully populated. As a consequence of the properties of the forwarding algorithm, the entries in the routing table of the incoming node will contain entries of nodes with the lowest level of aggregation to the incoming node given the requirements of the routing table.

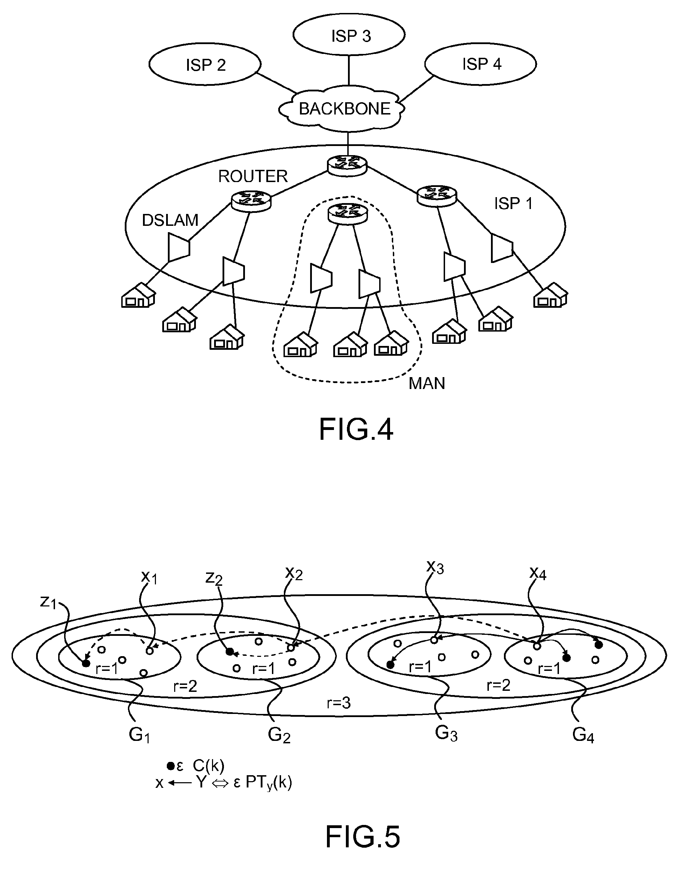

In one embodiment, the content of the publish message (in particular the file ID and a node ID to which the file ID is associated) will be stored at a node. However, instead of the node ID holding the data, the publish message will contain the ID of the last exit point on the forwarding path of the publish message. The last exit point will itself store the ID of the previous to last exit point passed by the forwarding path of the publish message. Likewise, the previous to last exit point will stored the ID of the exit point previous to that, etc. Thus, each exit point stored the ID of the previous exit point, each in association with the file ID. This is illustrated in Figure 5. Consequently, rather than the final rendezvous point (which may but need not be an exit point) indicating the node storing the data, the final rendezvous point stores the ID of the last exit point, which itself stores the ID of the exit point previous to that until the first exit point along the forwarding path is reached. This first exit point stores the ID of the node holding the data. Thus, when a lookup message is received at the rendezvous point, the rendezvous point node transmits a message to the previous exit point, which itself relays the message to the exit point previous to that etc..By backward linking the exit points in this way, the a node holding the ID of the node holding the data can be reached.

From the above description, it can be seen that the above embodiments provide a convenient way of forwarding a message between the peers of a peer to peer network where the peers are connected by an underlying hierarchical network.

The additional comments relating to embodiments of the invention and to theoretical considerations are provided below.

By running peer-to-peer applications on home gateways, Internet Service Providers (ISPs) can greatly reduce the load on datacenters and the traffic on their networks. To achieve this, peer-to-peer traffic should be localized, i. e., applications should favor nearby objects over distant ones.

Consider, for instance, the ISP network shown in Figure 4. This shows a further example of a hierarchical structure of a typical national ISP network. At the lowest level, several ADSL modems (typically 1024) located in the same neighborhood are connected to a Digital Subscriber Line Access Multiplexer (DSLAM). We assume IP-enabled DSLAMs that can route traffic between two local subscribers. At the next level, the users located in large cities are connected through a Metropolitan Area Network (MAN).

At the ISP level, several MANs are interconnected by the ISP's own network. At the Internet level, the ISP connects to other national or international ISPs.

Nano Datacenters project or NaDa aims at running ISP-managed peer to peer applications on ISP managed gateways. A prototype of this application is a peer assisted video on demand service, in which movies are stored on the local drives of gateways. Whenever a home user wishes to see a movie, a copy can be retrieved from a nearby gateway as opposed to a central server maintained by the ISP. The NaDa architecture can yield considerable cost reductions to the ISP: it has been shown that replacing monolithic datacenters with NaDa can result in massive (60-80%) savings for the provider in terms of energy costs - a data centre can contains primarily electronic equipment used for data processing (servers), data storage (storage equipment), and communications (network equipment).

Thus NaDa is a system for allowing distributed hosting.

An application according to NaDa can leverage data transfers between two users belonging to the same DSLAM, thus reducing the need for any traffic on the metropolitan network. If no source is found in the local DSLAM, selecting a source within the same MAN would avoid stressing the ISP links that connect remote metropolitan areas.

However, locating a close available node in a large peer-to-peer system is a challenging task.

Here, we define the distance between two home users as the level of the smallest aggregation group to which they both belong. For instance, two users of the same DSLAM are at distance 1, two users in different DSLAMs but on the same MAN at are distance 2, and so on. Using this distance, we present a distributed hash table or DHT that allows applications to locate the closest node sharing a given object. The distance defined above is just one example of a class of distances known as *ultrametrics.*

In contrast with prior art UHT can locate preferably the closest object to the node requesting it. Moreover, it does so without necessarily incurring a large message overhead. In fact, UHT generates a very well balanced load: we have found through simulations that the maximum load imposed on nodes by the NaDa application does not depend on the number of nodes in the system. This is quite surprising, given that maximum load of non-localized state-of-the-art DHTs can grow linearly with the node population.

Next, we provide a brief overview of our main results.

Our system consists of a set of nodes $N^-$, where $|N| = N$, which store and share data objects belonging to a set $\kappa$. In the case of the NaDa application, these nodes correspond to gateways installed at residences of home users. Each object in $\kappa$ may be stored by more than one nodes (*i.e.*, multiple copies can exist).

Our DHT design will support three operations related to object manipulation (PUBLISH, UNPUBLISH, and LOOKUP) and two operations handling node churn (INSERTNODE and REMOVENODE).

A PUBLISH($x,k$) operation is initiated when a node $x \in N$ wishes to share an object $k \in \kappa$: the aim of this operation is to inform other nodes in the network of the availability of k at $x$. Similarly, an UNPUBLISH($x,k$) operation is initiated by $x$ to inform other nodes that object $k$ is no longer available at $x$. A LOOKUP($x,k$) is initiated by a node $x$ to obtain a copy of object $k$. Finally, the INSERTNODE($x$) and REMOVENODE($x$) operations allow a node $x$ to join or leave the system.

The node set *N* is embedded in a metric space with an integer distance metric d: $N \times N \rightarrow N$. In the context of the NaDa application, $d(x,y)$ will capture the level of the smallest aggregation group (DSLAM, MAN, ISP, *etc.*) to which both *x* and *y* belong. We will assume that *d* is an ultrametric: for any three nodes *x,y,z,* the metric d satisfies the inequality

$$d(x,y) \leq \max\{d(x,z), d(z,y)\}. \tag{1}$$

One can verify that the metric provided by the NaDa paradigm is indeed an ultrametric.

We assume that any two nodes know (or can easily compute) their relative distance. This is reasonable in the NaDa context: given that nodes are gateways managed by a single ISP and installed for long periods of time at fixed locations, such information may be readily available.

We define the *diameter* of *N* as

$$h = \max_{x,y \in N} d(x, y). \tag{2}$$

We assume that $h = O(\log N)$; in the context ofNaDa, this means that the nested hierarchy of the ISP has at most $O(\log N)$ height.

Given a node *x* and a set $S \subseteq N$, we define the distance of *x* from *S* as:

$$d(x, S) = \min_{y \in S} d(x, y). \tag{3}$$

For any $k \in \kappa$, a LOOKUP(x,k) operation allows a node $x \in N$ to locate the nearest copy of *k*. More precisely, the following holds:

Theorem 1. *Given an object $k \in \kappa$, let (k) $\subseteq$ N be the set of nodes storing k. If C(k) is non-empty,* LOOKUP(x,k) *returns a $y \in$ C (k) such that d(x,y) = d(x, C(k)).*

The proof of this theorem can be found in Appendix B One expects that localized lookups will be less efficient than lookups implemented by a non-localized DHT. In particular, locating the nearest object requires, *e.g.*, to first ascertain that it is not stored at any node within distance 1 from *x* before searching at nodes at distance 2, which may increase the message cost compared to an unconstrained lookup. Nonetheless, the following theorem, whose proof can be found in Appendix C, asserts that the complexity of all operations supported by our DHT is of the same order as the ones in the aforementioned non-localized DHTs. In particular, their message cost is poly-logarithmic with the number of nodes *N*.

Theorem 2. *The cost of* LOOKUP, PUBLISH, UNPUBLISH *and* REMOVENODE *operations is* $\Theta(\log N)$ *in expectation. The cost of* INSERTNODE *operations is* $\Theta(\log^2 N)$ *in expectation.*

Node Load: we turn now our attention to characterizing the message load (in messages per second) imposed on each node. To characterize this load, we propose a model that aims to capture the behavior of the NaDa application. We will refer to these assumptions collectively as the *NaDa model.* Note that Theorems 1 and 2 do not require any of the additional assumptions presented in this section. 1

Topology: We define the *closed ball* of radius $r \in N$ centered at a node $x \in N$ as follows:

$$B_x(r) = \{y \in N \text{ s.t. } d(x, y) \leq r\}. \tag{4}$$

To develop the theory, we first make an additional assumption on the hierarchical topology imposed by our ultrametric. More specifically, we assume that the branching factor of the hierarchy is constant, *i.e.*, given $r > 0$,

$$\begin{cases} |B_x(r)| = |B_y(r)| = B(r) & \forall x, y \in \mathcal{N} \\ B(r) = aB(r-1), & a > 1 \end{cases} \tag{5}$$

where $a$ is a constant in $N$. Alternatively, (5) states that the balls around a node $x$ exhibit exponential growth with a constant factor, that is the same for all x.

Offered Load: we will assume (assumptions herein are for the purpose of theoretical derivations) that $\kappa = \{k\}$ is a singleton and characterize the load (in messages per second) generated by LOOKUP, PUBLISH and UNPUBLISH operations for the object $k$. We assume that every node $x \in N$ starts a LOOKUP($x,k$) according to a Poisson process of rate $\lambda$. When a node finds a movie, it subsequently begins downloading and viewing it. The node storing it has limited bandwidth capacity and can only serve one download at a time. For this reason, once it is contacted by a LOOKUP operation, it provides the movie to the node requesting it and immediately declares the movie unavailable by issuing an UNPUBLISH operation. We assume that download times are exponentially distributed with mean 1. After the download concludes, the user storing the copy of the object declares that it is again available by issuing a PUBLISH operation.

Provisioning: We assume that the copies of the object $k$ in the network are proportional to the node population and evenly distributed among nodes. In particular, there exists a constant $C \in [0,1]$ such that for any $x \in N$ and any $r \in \{0, ...,h\}$,

$$\left| B_x(r) \; \mathcal{C}(k) \right| = C |B_x(r)|, \tag{6}$$

i.e., the number of nodes in $B_x(i) \subseteq N$ storing object $k$ is equal to $C|B_x(i)|$.

We also assume that the network is over-provisioned by the following factor:

$$\frac{\lambda}{C} < (1 - \epsilon)\frac{a-1}{a}, \tag{7}$$

where $a$ is is the ratio of the size of a group of aggregation at level r divided by the size of a group at level r-1. and $\epsilon > 0$.

As discussed, the home devices at NaDa are managed by the ISP. The ISP can therefore place copies of the object to whichever nodes it sees fit and, in particular, it can over-provision the network to satisfy. We stress that $k$ may be stored in a node but may not necessarily be available: even if many nodes in a given ball around $x$ have the object $k$, all of these copies may be unavailable because of concurrent downloads.

Under the above three assumptions, we are able to show the following result:

Theorem 3. *Under the assumptions of the NaDa model, the message load at every node is O*(1).

The proof of this theorem can be found in Appendix D. The above result is quite surprising; if a non-localized DHT was used, all requests for the object $k$ would be routed to a single node, the so-called root of $k$. Since the object is requested by each node with rate $\lambda$, the root would therefore have to sustain a load of the order of $\Omega(\lambda N)$, *i.e.*, linear in $N$. In contrast, the load imposed on *every* node under our DHT-including the root of the key-is no more than a constant.

Figure 5 shows a tree of local maxima maintained in publishing tables of UHTin a network of 20 nodes with a hierarchy of height 3. The network consists of four groups (balls) of nodes at distance 1 from each other, denoted by $G_i$, $1 \le i \le 4$. The local maxima w.r.t. a key $k$ of each of these groups are denoted by $x_i$, $1 \le i \le 4$. Node $x_2$ is also the maximum w.r.t. $k$ of group $G_1 \cup G_2$, while node $x_4$ is the root of key $k$. Nodes storing object $k$ are marked in solid dots. Note that the links in the publishing tables establish a tree connecting the root to every node storing $k$. Assuming that, initially, no nodes in $G_1 \cup G_2$ store object $k$, the dashed line indicates the links created when node $z_1$ issues a Publish($z_1,k$) operation. A subsequent Publish($z_2,k$) operation would terminate at $x_2$, as $PT_{x2}(k) \ne \emptyset$, adding the dotted link. Finally, a subsequent Unpublish($z_1,k$) operation would remove the links in publishing tables until node $x_2$, maintaining the path from the root to $z_2$.

Here, we describe the main components of UHT in more detail.

In short, UHT can be seen as an extension of a system in which, for each object $k$ there exists a distinguished node called the *root* of $k$. This node acts as a rendezvous-point. In particular, when a node $x$ wishes to declare that it stores $k$-i.e., publish $k$-it forwards a message over the Pastry overlay network towards the root. The root thus learns that $x$ stores $k$. When a node $y$ wishes to retrieve $k$ it initiates a lookup by also forwarding a message towards the root. The latter can respond by redirecting $y$'s request to a node that previously published $k$, e.g., $x$. Nodes can also unpublish objects, again by contacting the respective roots and informing them that they no longer share these objects.

This approach suffers from two disadvantages: first, a node requesting object $k$ may not necessarily retrieve the nearest object and, second, all operations related to $k$ (publish, lookup, and unpublish) always involve message exchanges with the root. As such, the system does not provide an assurance for the locality of returned results. Moreover, it can lead to an excessive load at the root.

In contrast, UHT addresses these issues as follows. Like the above system, there also exists a distinguished node (the root) for every object $k$. However, UHT has the following important property: for every key $k$ there exists a rendezvous-point (a local "root") in every ball of radius $r$. When a node $x$ requests $k$, it can find out whether someone at distance one from it is storing $k$ by first contacting the rendezvous-point of $B_x(1)$. If this fails, its request is forwarded to the next rendezvous-point, i.e., the one corresponding to $B_x(2)$, and so forth, until the message eventually reaches the root w.r.t. $k$.

Consequently, in the theoretical model (terms such as "closest", "guarantee" and "lowest" when used are intended to be understood in the context of the theoretical model) upon the request of an object, the closest node storing it is indeed found. Moreover, not all requests need to reach the root, as they can be satisfied much earlier, at one of the lower rendezvous-points.

Nodes and Data Objects. The identifier space

Nodes in $N$ and objects in $\kappa$ are each given a unique identifier, expressed as a binary string of length $M$, where $M = \Theta$ (long $N$). This is obtained by hashing a descriptor of the node (e.g., its IP address) or of the object (e.g., the file name) to $Z_2^M$. We make the standard consistent hashing assumption, under which the hashing results (with high probability) in distinct identifiers selected uniformly at random from the set $Z_2^M$. We refer to the identifier of a node as its id and to the identifier of an object as its *key*. We will identify nodes with their ids and objects with their keys, taking $N \sqcup Z_2^M$ and $\kappa \sqcup Z_2^M$.

A total order of the identifier space.

For every $x \in Z_2^M$, let $x[i]$ be the $i$-th most significant bit of $x$, where $i = 1, ...,n$. Let pfx$(x,y)$ be the length of the common prefix between two identifiers $x,y \in Z_2^M$. I.e., if $x = y$ then pfx$(x,y) = M$; otherwise, pfx$(x,y) = \min\{j : x[j]{\neq}y[j]\}$- 1.

Given a *key* $k \in Z_2^M$, we define an ordering of the identifier space $Z_2^M$ with respect to $k$ as follows.

Definition 1. *(k-order) Given $x,y,k \in Z_2^M$, where $x{\neq}y$, we will say that $x$ is greater than $y$ w.r.t. the k-order, and write $x > ky$, if*

$$x[\mathrm{pfx}(x,y)+1] = k[\mathrm{pfx}(x,y)+1] \neq y[\mathrm{pfx}(x,y)+1].$$

Intuitively, $x > k\, y$ implies that at the first bit at which the two identifiers $x$, $y$ differ, $x$ agrees with key $k$ while $y$ does not. It is easy to see that if pfx$(x,k) >$ pfx$(y,k)$ then $x > ky.$ The converse is not necessarily true however: for example, if $M = 4$ and $k = 0000$, $x = 0100$, $y = 0110$, then $x > ky$ although pfx$(x,k) =$ pfx$(y,k)$.

We write $x \geqslant k\, y$ if $x > k\, y$ or $x = y$. As $x{\neq}y$ will differ in at least one bit, $\geqslant k$ is a total order on $Z_2^M$ and thus also on the subset $N \sqcup Z_2^M$. For every non-empty set $A{\subseteq}Z_2^M$, we denote by $\max_{\geqslant k} A$ the maximum of $A$w.r.t. the $k$-order. We will call $\max_{\geqslant k}N$ the *root* w.r.t. key $k$. *Local maxima w.r.t. the k-order.*

Given a node $x \in N$, recall that the ball $B_x(r)$ consists of all nodes at distance at most $r$ from $x$. Recall also that $h$ denotes the diameter of the network, given by (2). Let

$$m_k(x,r) = \max{}_{\geqslant k}B_x(r), r = 0,1,...,h \qquad (8)$$

be the maximum element in $B_x(r)$, with respect to the $k$-order. Note that $m_k(x,0) = x$ while, for all $x \in N$, the maximum $m_k(x,h)$ is the root $\max_{\geqslant k}N$. Note also that $m_k(x,r)$ depends on $k$: different keys $k$ yield different orderings $\geqslant_k$ and, hence, different maxima.

Given a node $x$, let $y$ be a node in $B_x(r)$. Eq. (1) implies that

$$m_k(x,r) = m_k(y,r) \text{ for all } y \in B_x(r). \qquad (9)$$

In other words, we can alter the "center" $x$ of a ball $B_x(r)$ without affecting the local maximum $m_k(x,r)$, as long as the new center $y$ is within distance $r$ from the original center $x$; this follows directly implication from the fact that $d$ is an ultrametric. *Ultramertics as nested hierarchies.*

An alternative definition of ultrametric spaces can be given in terms of the balls $B_x(r)$. The formal statement is given by the following proposition (*see*, *e.g.*, [9] for a proof), which will be used throughout our analysis:

Proposition 1. *Consider an integer metric space (N,d) and let $B_x(r)$, $x \in N$, $r \in N$ as in (4). Then d is an ultrametric if and only if, for every $r \in$ N, and for every $x, y \in N$ either $B_x(r) \cap B_y(r)$ = Øor $B_x(r) = B_y(r)$.*

Intuitively, a metric is an ultrametric if and only if the above balls of radius $r$ form a partition of $N$. In particular, if a node $z$ is at distance $r$ from both nodes $x$ and $y$, the latter two must also be at a distance at most $r$. Proposition 1 also implies that closed balls of different radii form a nested hierarchical structure, like the one illustrated in Fig. 1 : each ball of radius $r$ can be partitioned in to several balls of radius $r$-1, which in turn can be partitioned into balls of radius $r$-2, *etc.*

Data Structures *Ultramertics as nested hierarchies.*

The following are data structures maintained by UHT nodes.

*Routing Table - Ultramertics as nested hierarchies.*

Each UHT node maintains a routing table containing $M$ entries. We denote by $RT_x$ the routing table of node $x$, and by $RT_x(i) \in Z_2^M \cup \{\bot\}$ its $i$-th entry-we use the symbol $\bot$ to denote an "empty" entry. Given $x \in N$, we define the set of nodes sharing a prefix of length $i$ with $x$:

$$\mathcal{L}_x(i) = \{y \in \mathcal{N} \text{ s.t. } \text{pfx}(x,y) = i\}, \ i = 0, \ldots, M. \tag{10}$$

The routing tables of nodes in our system are designed so that they satisfy the following properties: first, the $i$-th entry of $RT_x$ shares a prefix of length $i$ with $x$-as do nodes, *e.g.*, in Pastry [5] and Tapestry [7]. Second, the entries in the routing table *are as local as possible*: there is no node in $_x(i)$ that could be placed in the $i$-th entry of the routing table and is closer to $x$ than $RT_x(i)$. In this, UHT departs from the above DHTs, that offer no such guarantees on the proximity of entries of the routing table to $x$. More formally:

Property 1. *(Routing Table) If $_x(i) = \emptyset$, then $RT_x(i) = \bot$. If $_x(i) \neq \emptyset$, then*

$$RT_x(i) \in \mathcal{L}_x(i) \text{ and } d(x, RT_x(i)) = d(x, \mathcal{L}_x(i)). \tag{11}$$

We stress here that Property 1 is not an assumption: we can guarantee that it holds by the way we design our INSERTNODE and REMOVENODE operations, while, *e.g.*, in [5], no explicit algorithm is described. In Section 4.4 operations for adding and removing nodes have been designed in such a way so that Property 1 is always satisfied (see Lemma 2).

*Inverse Routing Table - Ultramertics as nested hierarchies.*

We also equip nodes with an "inverse" routing table. Each node $x$ maintains a table $IRT_x$, such that $y \in IRT_x$ if and only *if $x \in RT_y$*. The inverse routing table will be used both when nodes enter and leave the system, in order to reconfigure the connections between users. For example, when a node leaves the system, the nodes pointing to it should be informed of this departure and reconfigure their routing table; the inverse routing table of the departing node can be used to that effect. The expected size of an inverse routing table is $\Theta(\log N)$.

*Publishing Table - Ultramertics as nested hierarchies.*

In addition to the routing table, additional links are maintained by the local maxima defined by (8). In particular, every node $x$ maintains a *publishing table $PT_x$*. For every $k \in \kappa$, $PT_x$ will contain an associated set of links, which we denote by $PT_x(k) \subseteq N$. The set $PT_x(k)$ will be non-empty if and only if $x = m_k(y,r)$ (*i.e.*, $x$ is a local maximum, w.r.t. the $k$-order) of some $y$ storing object $k$. In particular, for every $y \in C(k)$, the publishing tables establish a chain connecting the local maxima of $y$. Hence, as illustrated in Fig. 2, the publishing tables between maxima form a tree that is rooted at the root $\max_{\geqslant_k} N$, and whose leaves are nodes in $C(k)$-the latter are local maxima of $r = 0$.

In particular, the entries of the publishing table satisfy the following property:

Property 2. *Let C(k) be the set of nodes storing object k. Then $z \in PT_x(k)$ if and only if either (a) z = x and x $\in$ C(k) or (b) z≠x, and there exist $y \in$ C(k) and r > 0 such that*

$$x = m_k(y,r), \quad z = m_k(y, r-1).$$

We stress that, just like Property 1, Property 2 is also an outcome of the design of UHT. In particular, the operations supported by UHT (such as, inserting a node or publishing an object), have been designed so that Property 2 always holds (see Lemma 2).

Let for $A \subseteq N$ let $K(A)$ be the number of keys $k$ such that $A \cap C(k) \neq \emptyset$. Then, the expected number of keys $k$ for which $PT_x(k) \neq \emptyset$ will be of the order of $\sum_{r=0}^{h} \frac{K(B_x(r))}{|B_x(r)|}$. This is worse than $K(N)/N$, the expected number of keys that a root in Pastry has to maintain. Nevertheless, if $K = O(N)$ and the distribution of keys among nodes is homogeneous, the keys for which a node will be responsible in UHT will be of the order of log $N$.

*Inverse Publishing Table - Ultramertics as nested hierarchies.*

Finally, to handle node arrivals and departures, we also equip nodes with a table of links inverting the ones established by publishing tables. In particular, each node $x$ maintains an inverse publishing table $IPT_x$ such *that* $y \in IPT_x(k)$ if and only if $x \in PT_y(k)$. The size of the inverse publishing table is in expectation the same as for the publishing table.

**Table 1: Summary of Notation**

| | |
|---|---|
| $N$ | Set of node ids |
| $k$ | Set of object keys |
| $C(k)$ | Set on nodes storing object $k$ |
| $M$ | Length of identifiers |
| $d(x,y)$ | Distance between nodes $x,y$ |
| $d(x, S)$ | Distance of node $x$ from set $s$ |
| $h$ | Network diameter |
| $B_x(r)$ | Ball of radius $r$ centered at $x$ |
| $pfx(x,y)$ | Length of common prefix between $x$ and $y$ |
| $\geqslant_k$ | The $k$-order |
| $\max_{\geqslant_k} S$ | The maximum of set $S$ w.r.t. the $k$-order |
| $m_k(x,r)$ | Maximum of $B_x(r)$ w.r.t. the $k$-order |
| $S_x(k)$ | Successor set of $x$ w.r.t. the $k$-order |
| $C_x(i)$ | Nodes sharing prefix of length $i$ with $x$ |
| $(I) RT_x$ | (Inverse) Routing Table of $x$ |
| $(I)PT_x$ | (Inverse) Publishing Table of $x$ |
| $RR(x,k,r)$ | Routing rule applied at node $x$ w.r.t key $k$ with radius $r$ |
| $R P(x,k)$ | Routing path started at $x$ w.r.t. key $k$ |

The Routing Rule - *Ultramertics as nested hierarchies.*

Recall that the routing tables determine the "overlay" network formed by nodes, as every node $x$ connects to its neighbors in $RT_x$. In the following, we define a routing rule over these routing tables: this rule assumes that a node *x* receives a message tagged with a *key* $k \in Z_2{}^M$, and determines to which node in $RT_x$ this message should be forwarded. In this section, we simply describe the rule and derive some important properties of the routing paths established under this rule; we will describe in more detail how it will be used, *e.g.*, to find content objects or to add a new node in the system.

We define the *successor set* of *x* w.r.t. *k* as the set of nodes greater than *x* w.r.t. the *k*-order, *i.e.*,

$$S_x(k) = \{y \in \mathcal{N} \text{ s.t. } y \succ_k x\}.$$

Given a node *x*, a key *k*, and a radius *r* ≥ 0, we define *RR(x,k,r)* as follows: Routing Rule: For A = $RT_x \cap S_x(k)$ define

$$RR(x,k,r) = \begin{cases} \perp, & \text{if } A = \emptyset, \\ \max_{\succeq_k} A \cap B_x(r), & \text{if } A \cap B_x(r) \neq \emptyset, \\ \max_{\succeq_k} A \cap B_x(r_{\min}), & \text{o.w.} \end{cases} \qquad (12)$$

where $r_{\min} = d(x,A)$.

Observe that the set A = $RT_x \cap S_x(k)$ contains all entries in *x*'s routing table that are greater than *x* w.r.t. the *k*-order. Provided that this set is non-empty, *RR(x,k,r)* is an element from the above set. In particular, if $r \geq r_{\min}$, the selection of *RR(x,k,r)* is limited among the elements in A that are within *r* distance from *x* (w.r.t. the distance metric *d*). If no such nodes exist (*i.e.*, $r < r_{\min}$), the selection is limited among the elements nearest to *x*. Finally, from these elements, the maximum is selected (w.r.t. the k-ordering). In summary, provided that A≠∅ the routing rule is *monotone* in the *k*-order, *i.e.*, $RR(x,k,r) >k \, x$, for all $r \geq 0$. Moreover, subject to the constraint of monotonicity, the routing rule produces an entry of the routing table that is *within distance r* or, if no such entry exists, an entry that is *as local as possible, i.e.,* $d(x,RR(x,k,r)) \leq \max(r,d(x,A))$.

*Routing Paths - Ultramertics as nested hierarchies.*

As mentioned above, the routing rule will be used to forward messages pertaining to a certain key. In this section, we investigate some important properties of this forwarding. In particular, given a node $x \in N$ and a key $k \in Z_2{}^M$, consider the sequence $x_0, x_1, x_2, \ldots$ where $x_0 = x$ and $x_i$ is obtained from $x_{i-1}$ according to the following iterative process.

```
1: i ←0, x₀ ← x, r₀ ← 0
2 : while RR(xᵢ, k,rᵢ)≠⊥ do
3: i←i+1
4 : xᵢ ← RR(xᵢ₋₁, k,rᵢ₋₁)
5: rᵢ ← max(rᵢ₋₁,d(xᵢ,xᵢ₋₁))
6 : end while
```

This process captures the sequence the nodes visited by a message generated by x and forwarded by every node receiving the message according to the routing rule. At each node visited, the routing rule is always applied w.r.t. key *k*.

The radius $r_i$ used in iteration i satisfies the following property, which gives some intuition into how it limits the routing choices during forwarding:

$$r_i = \min\{r : x_0,\ldots,x_i \in B_x(r)\} \qquad (13)$$

PROOF OF (13). We will prove this by induction on i. Note first that (13) holds for *i* = 0. Assume that it holds for *i* = *j* ≥0. We will show it also does for *i* = *j* + 1. If $d(x,x_{j+1}) \leq r_j$, then $r_{j+1} = \max(r_j,d(x_{j+1},x_j)) = r_j$ as, by (1), $d(x_j,x_{j+1}) \leq \max[d(x,x_j),d(x,x_{j+1})]$. If $r' = d(x,x_{j+1}) > r_j$, then $d(x_j,x_{j+1}) \leq r'$. In fact, it equals *r'* because, if $d(x_j,x_{j+1}) < r$ then

$$d(x, x_{j+1}) \leq \max(d(x, x_j), d(x_j, x_{j+1})) < r',$$

a contradiction. Hence $r_{j+1} = \max(r_j,r) = r$. In both cases, (13) holds for *i* = *j* + 1, so it holds for all $i \geq 0$.

In other words, the radius $r_i$ captures, at each iteration, the distance that the message has travelled from $x_0 = x$. The routing rule therefore tries to select a node in the routing table that is no further from *x* than any other node visited by the message so far-always subject to the constraint of monotonicity w.r.t the *k*-order. If no such node exists, the closest node possible is selected, and $r_i$ is increased accordingly.

The monotonicity of the routing rule implies that the above sequence is an increasing sequence (in the $k$-order). As a result, the elements in this sequence are distinct-in other words, no node is visited twice. The finiteness of $N$ implies that, for some $\ell$, $RR(x\ell,k,r\ell) = \perp$, and the above while loop must terminate. We call the finite sequence $\{x_0, ...,x\ell\}$ the *routing path* starting from $x$ w.r.t. $k$ and denote it by $RP(x,k,)$.

PUBLISH($x,k$)

```
1: (m.s,m.k,m.r) ← (x,k, 0)
2: z ← x
3: while z≠⊥ do
4: forward m to z
5 : if ¬IsEXITPOINT (z, m.k, m.s, m.r) then
6: z ← z
7 : z ← RR(z,m.k,m.r)
8 : m.r ← max(m.r,d(z,z))
9: else
10 : if PT_z(k) = Ø then
11: add m.sto PT_z(m.k)
12 : add z to IPT_{m.s}(m.k)
13 : m.s ← z
14: z ← z
15 : z ← RR(z,m.k,m.r)
16 : m.r ← max(m.r,d(z,z))
17 : else
18 : add m.s in PT_z(m.k)
19 : add z to IPT_{m.s}(m.k)
20: z ←⊥
21 : end if
22: end if
23: end while
```

UNPUBLISH($x,k$)

```
1: (m.s,m.k,m.r) ← (x,k, 0)
2: z ← x
3: while z≠⊥ do
4: forward m to z
5 : if ¬IsEXITPOINT (z, m.k, m.s, m.r) then
6: z ← z
7 : z ← RR(z,m.k,m.r)
8 : m.r ← max(m.r,d(z,z))
9: else
10 : PT_z(k) ← PT_z(k) \{m.s}
11 : IPT_{m.s}(k) ← IPT_{m.s}(k) \{z}
12 : if PT_z(k) = Ø then
13 : m.s ← z
14 : z ← z
15 : z ← RR(z,k,m.r)
16 : m.r ← max(m.r,d(z ,z))
17 : else
18 : z ← ⊥
19: end if
20: end if
21: end while
```

IsEXITPOINT($z,k,x,r$) /* Return true if $z = m_k(x,r)$ */

1: return $d(x,z) \leq r$ and $(RR(z,k,r) = \perp$ or $d(x,RR(z,k,r)) > r)$

$z$ = LOOKUP($x,k$)

1: $(m.s, m.k, m.r) \leftarrow (x, k, 0)$

2: $z \leftarrow x$

3: found $\leftarrow$ false

4 : while $z \neq \perp$ or -found do

5: forward $m$ to $z$

6 : if ¬ISEXITPOINT ($z, m.k, m.s, m.r$) then

7: $z \leftarrow z$

8 : $z \leftarrow RR(z, m.k, m.r)$

9 : $m.r \leftarrow max(m.r, d(z,z))$

10 : else

11 : if $PT_z(k) \neq \emptyset$ then

12 : found $\leftarrow$ true

13 : end if

14 : end if

15: end while

16: if $z \neq \perp$ then

17 : while $z \notin C(k)$ do

18: Pick $y \in PT_z(m.k)$ s.t. $d(z,y) = d(z, PT_z(m, key))\}$

19: $z \leftarrow y$

20: forward $m$ to $z$

21: end while

22: end if

23: return $z$

Figure 3: Pseudocode for operations PUBLISH, UNPUBLISH, and LOOKUP operations.

*Exit Points and Local Maxima -Ultramertics as nested hierarchies.*

A notion that will be useful in our analysis is that of an *exit-point* from a ball $B_x(r)$. Intuitively, a node in $B_x(r)$ is an exit-point w.r.t. $k$ if following the routing rule applied to this node leads outside the set $B_x(r)$. Note that the maximum element $y = m_k(x,r) = \max_{\geq k} B_x(r)$ will be an exit point of $B_x(r)$: this is because either $RR(y,k,r) = \perp$ or $RR(y,k,r) >_{ky}$, by the monotonicity of the routing rule. In either case, $RR(y,k,r) \notin B_x(r)$.

Definition 2. *(Exit-point) Given a ball $B_x(r) \subset N$ and key $k \in Z_2^M$, a node $z \in B_x(r)$ will be an exit-point of $B_x(r)$ w.r.t. key k if $RR(z,k,r) \notin B_x(r)$.*

Rather surprisingly, Property $\underline{1}$ implies that $m_k(x,r)$ is the *only* exit point of $B_x(r)$. More formally:

Lemma 1. *Given $x \in N$ and $k \in Z_2^M$, a node $z \in B_x(r)$, for some $r \geq 0$ is exit-point of $B_x(r)$ w.r.t. k if and only if $z = m_k(x,r)$.*

PROOF. The "if" direction is implied by the monotonicity of the Routing Rule. For the "only if" direction, we will show that if $z \neq m^* = m_k(x,r)$, then $RR(z,k,r) \in B_x(r)$. Note first that $z, m^* \in B_x(r)$ implies $d(z,m^*) \leq r$, by ($\underline{1}$). Moreover, the successor set $S_z(k)$ is non-empty as it contains $m^*$. Let $i = \text{pfx}(z,m^*) < M$; then $m^* \in C_z(i)$, so $RT_z(i) \neq \perp$ by Property $\underline{1}$. In particular, by Property $\underline{1}$, $\text{pfx}(z, RT_z(i)) = i$ and $z[i+1] \neq RT_z(i)[i+1] = k[i+1]$, so $RT_z(i) \in S_z(k)$. Finally, by ($\underline{11}$), $d(z, RT_z(i)) = d(z, C_z(i)) \leq d(z,m^*) \leq r$. The above imply that $RT_z(i) \in RT_z \, S_z(k) \, B_x(r) \neq \emptyset$, so the routing rule gives

$$RR(z,k,z) \overset{(12)}{=} \max_{\succeq_k} RT_z \cap S_z(k) \cap B_z(r) \in B_z(r)$$

Thus both $x$ and $RR(z,k)$ are $B_z(r)$, so $d(x RR(zk)) \leq r$, by ($\underline{1}$).

Lemma $\underline{1}$ suggests a simple algorithm for detecting whether a node $z$ is the maximum in ball $B_x(r)$ w.r.t. the $k$-order; one need only check if $z$ is an exit point from that ball (see also subroutine ISEXITPOINT in Fig. $\underline{3}$).

Lemma $\underline{1}$ also suggests that $z = \max_{\geq_k} N$ is the only node in the entire network from which routing w.r.t. $k$ will return $\perp$; any other node will route towards a node within the network, while $RR(z,k,r) = \perp$ irrespective of the radius $r$ used. We will call this node the *root* w.r.t. key $k$. Observe that, by the definition of routing paths, any path $\{x_i\}_{i=1,...,\ell}$ w.r.t. $k$ must terminate at the root, *i.e.*, $x_\ell = \max_{\geq k} N$.

Another important implication of the above lemma is that the routing path starting from $x$ must pass through all of the local maxima $m_k(x,r)$, $r = 0, ...,h$, as these are the exit points of all balls centered on $x$. This is stated formally in the following corollary.

Corollary 1. *Let $RP(x,k) = \{x_i\}_{i=0,...,\ell}$ be the routing path starting from $x$ w.r.t. k. Then, for every $r = 0, ...,h$, there exists a j such that $x_j = m_k(x,r)$. Moreover, $x_{j'} \in B_x(r)$ for any $j' \leq j$ and $x_{j'} \notin B_x(r)$ for any $j' > j$.*

PROOF. To begin with, $RR(x_\ell, k, r_\ell) = \perp$, so the subset of nodes in $\{x_i\}_{i=0,,\ell}$ for which the routing rule w.r.t. $k$ points outside the ball $B_x(r)$ is non-empty. Take the first node in the sequence for which this is true, say $x_j$. The construction of the sequence and the fact that $x_0 = x \in B_x(r)$ imply that $x_j \in B_x(r)$, for all $j' \leq j$. By ($\underline{13}$), this implies that $r_j \leq r$. Moreover, since $RR(x_j, k, r_j) \notin B_x(r) = B_x(r)$, we have by ($\underline{12}$) that $d_{min} = d(x_j, RT_{xj} \, S_{xj}(k)) > r$. Hence, $RT_{xj} \, S_{xj}(k) \, B_{xj}(r) = \emptyset$, and $RR(x_j, k, r) \notin B_{xj}(r)$. Thus, $x_j$ is an exit point from $B_x(r)$ and, by Lemma $\underline{1}$, $x_j = m_k(x,r)$. Finally, $x_{j'} >_k x_j$ for all $j' > j$ by the monotonicity of the routing rule, so $x_{j'} \notin B_x(r)$, as $x_j$ is the maximum.

Corollary $\underline{1}$ indicates that routing paths stay as local as possible: starting from a node x, a routing path stays within a ball $B_x(r)$ until it reaches $m_k(x,r)$, at which point it exits the ball. As this is true for every radius $r$, the path traverses each of the balls $B_x(r)$ consecutively, eventually terminating at the root.

The corollary also implies that the routing paths of any two nodes $x,y \in N$ will overlap; in fact, the node at which these paths start overlapping depends on their distance $d(x,y)$. In particular, if $d(x,y) = r$, then ($\underline{1}$) implies that $B_x(r) = B_y(r)$. Therefore, the routing paths starting from $x$ and $y$ w.r.t. key $k$ will necessarily coincide at the exit points $m_k(x,r) = m_k(y,r)$; the paths will be identical from that point on, all the way to the root.

---

**INSERTNODE$(x)$**

1: $x$ is assigned an id $x \in \mathbb{Z}_2^M$
2: $y \leftarrow$ OBTAINCLOSEST$(x)$
3: POPULATERT$(x,y)$
4: $A \leftarrow$ FINDPSEUDOMAXIMA$(x,y)$
5: $r_{max} \leftarrow \max_{z \in A} d(x,z)$
6: for all $r \in \{1,...,r_{max}\}$ do
7: for all $z \in A$ s.t. $d(x,z) = r$ do
8: UPDATERT$(z,x)$
9: for all $k$ s.t. $PT_z(k) \neq \emptyset$ and $x >_k z$ and $d(z,IPT_z(k)) > r$ do
10: BECOMENEWMAX $(x,z,k)$
11: end for
12: end for
13: end for

$A=$INVERSEFIND$(z,x,r,l)$

1: $A = \emptyset$
2: for all $w \in IRT_z$ s.t. pfx$(w,x) = l$, $d(w,z) \leq r$ and $z >_l w$ do
3: $A \leftarrow A \cup$INVERSEFIND$(w,x,r,l)$

---

**POPULATERT$(x,y)$**

1: for $i = 0$ to $M - 1$ do
2: Pick $k \in \mathbb{Z}_2^M$ s.t. pfx$(x,k) = i$
3: $(m.s,m.k,m.r) \leftarrow (x,k,0)$
4: $z \leftarrow y$
5: while $z \neq \perp$ or pfx$(z,m.k) \neq i$ do
6: forward $m$ to $z$
7: $z \leftarrow z$
8: $z \leftarrow RR(z,m.k,m.r)$
9: $m.r \leftarrow \max(r,d(z,z))$
10: end while
11: $RT_x(i) \leftarrow z$
12: if $z \neq \perp$ then
13: $IRT_z \leftarrow IRT_z \cup \{m.s\}$
14: end if
15: end for

$A=$FINDPSEUDOMAXIMA$(x,y)$

1: $(m.s,m.k,m.r) \leftarrow (x,x,0)$

2: $z \leftarrow y$, $A = \emptyset$
3: while $z \neq \perp$ do
4: forward $m$ to $z$
5: if ISEXITPOINT$(z,m.k,m.s,m.r)$ then
6: $l \leftarrow$ pfx$(z,m.s)$
7: $r \leftarrow d(z,RR(z,m.k,m.r)) - 1$
8: $A \leftarrow A \cup$INVERSEFIND$(z,m.s,r,l)$
9: end if
10: $z \leftarrow z$
11: $z \leftarrow RR(z,m.k,m.r)$
12: $m.r \leftarrow \max(m.r,d(z,z))$
13: end while

---

**UPDATERT$(z,x)$**

1: $l =$ pfx$(z,x)$
2: $w \leftarrow RT_z(l)$
3: if $w \neq \perp$ then
4: remove $z$ from $IRT_w$
5: end if
6: $RT_z(l) \leftarrow x$
7: $IRT_x \leftarrow IRT_x \cup \{z\}$

**BECOMENEWMAX$(x,z,k)$**

1: $r \leftarrow d(z,x)$
2: for all $z \in PT_z(k)$ such that $d(z,z) \geq r$ do
3: remove $z$ from $PT_z(k)$ and $z$ from $IPT_z$
4: if $z \neq x$ then
5: add $z$ to $PT_x(k)$ and $x$ to $IPT_z(k)$
6: end if
7: end for
8: $w \leftarrow IPT_z(k)$
9: if $w \neq \perp$ then
10: remove $z$ from $PT_w(k)$

11: add $x$ to $PT_w(k)$
12: end if
13: $IPT_z(k) \leftarrow w$
14: if $PT_z(k) \neq \emptyset$ then
15: $IPT_z(k) \leftarrow x$
16: add $z$ to $PT_x(k)$
17: else
18: $IPT_z(k) \leftarrow \perp$
19: end if

---

4: end for
5: $A = A \cup \{z\}$
6: return $A$

Table 2: Pseudocode for the INSERTNODE operation and the sub-routines it uses

---

Operations Supported by UHT *Ultramertics as nested hierarchies.*

Having described the main properties of the routing tables maintained by nodes in UHT as well as a routing rule defined in terms of these tables, we turn our attention on how these can be used to implement the operations supported by UHT. These are the three operations for publishing, unpublishing and looking-up content objects as well as two operations handling node churn, *i.e.*, node additions and removals.

It is important to keep in mind that these operations have been designed in a manner that ensures that Property 1 and 2 are always true. In particular, we prove in Appendix A the following lemma:

Lemma 2. *Properties* 1 *and* 2 *are invariant under the* PUBLISH, UNPUBLISH, LOOKUP, INSERTNODE *and* REMOVENODE *operations,* i.e., *if they were true before such an operation, they will remain so after the operation is executed.*

PUBLISH- *Ultramertics as nested hierarchies.*

A PUBLISH operation is used by nodes to inform other nodes about the availability of an object at their local storage. The pseudo-code for this operation can be found in Fig. 3.

Recall that the publishing tables $PT_z(k)$ w.r.t. key $k$ form a directed tree rooted at $\max_{\geqslant k} N$ (the root w.r.t. $k$). This tree connects the root to the local maxima $m_k(y,r)$ of every node $y \in C(k)$. To publish an object $k$, a node $x$ essentially attaches a new chain to this tree (see also Fig. 2). This chain contains $x$ and any of its local maxima not already in the tree. These local maxima are precisely the maxima of balls $B_x(r)$ that did not contain any node in $C(k)$ prior to the publication of $k$ by $x$.

As outlined in the pseudocode of PUBLISH in Table 2, this is accomplished as follows. Node $x$ creates a message $m$ containing three fields; a sender field $m.s$, a key field $m.k$ and a radius field $m.r$. These are initialized to $x$, $k$, and 0, respectively. The message $m$ is forwared over the routing path w.r.t. $k$ using the routing rule (12). Any exit point $z$ encountered (including $x$ itself, as $x = m_k(x,0)$) adds $m.s$ to its publishing table $PT_z(k)$. If the latter was empty prior to the addition of $m.s$, the sender field is set to $z$, and the message continues being forwarded on the routing path, until another exit point is reached. This process is repeated, connecting each exit point encountered to the previous one, until an exit point $z$ with a non-empty $PT_z(k)$ (or the root) is reached; at this point, the chain of connected exit points created thus is attached to the existing tree, and the propagation ceases.

Exit points (*i.e.*, local maxima) are detected through subroutine ISEXITPOINT. Note that, once at an exit point $z = m_k(x,r)$, to detect the next exit point from ball $B_x(r + 1)$ we assume that the center of the ball is at $m.s = z$, rather than $x$; this is because $B_x(r + 1) = B_z(r + 1)$-see also discussion in the end of Section 4.1.

UNPUBLISH - *Ultramertics as nested hierarchies.*

An UNPUBLISH($x,k$) operation essentially reverses the steps of a PUBLISH operation, by removing the chain connecting $x$ to the tree of local maxima. The branch removed contains precisely the maxima of balls $B_x(r)$ that cease to contain any node in $C(k)$ after $x$ unpublishes $k$ (see also Fig. 2).

The pseudocode of UNPUBLISH in table 2 again outlines how this is accomplished. Node $x$ creates a message $m$ with three fields $m.s$, $m.k$ and $m.r$, again intitialized to $x$, $k$, and 0, respectively. The message $m$ is again forwarded over the routing path w.r.t. $k$. The first exit point $z$ encountered removes $m.s$ from its publishing table. If, after this removal, $PT_z(k)$ is not empty, the propagation of $m$ ceases and UNPUBLISH terminates; otherwise, $z$ inserts its id in $m.s$ and continues forwarding the message over the routing path. Repeating the above process removes all local maxima $m_k(x, r)$ that cease to point to nodes storing $k$ after $x$ unpublishes $k$.

LOOKUP - *Ultramertics as nested hierarchies.*

A LOOKUP operation is used by nodes to locate objects. The pseudocode of this operation can be found in table 2. In a LOOKUP($x,k$) operation, node $x$ follows the routing path w.r.t. key $k$ until it encounters an exit point y with a non-empty $PT_y(k)$ entry (lines 4-15 of the LOOKUP pseudocode). Such an exit point belongs to the tree of local maxima of nodes storing $k$, as illustrated in Fig. 5. Thus, to find a node storing $k$, a link in $PT_y(k)$ can be followed; this process can be repeated, descending the tree of local maxima, until a node in $C(k)$ is found (lines 17-21 of the LOOKUP pseudocode).

Property 2 ensures that, once encountering an exit point $y$ with $PT_y(k) \neq \emptyset$, following the links in its publishing table will lead to a node in $C(k)$. Nonetheless, following an arbitrary link in $PT_y(k)$ does not ensure that the node found is as local as possible. If $r = d(x,C(k))$, LOOKUPshould return a node in $C(k) \cap B_x(r)$. This issue can be resolved by descending the tree of local maxima by selecting nodes that are always within the ball $B_x(r)$. This is indeed acheived by checking the condition in line 18 of LOOKUP in Fig. 3.

INSERTNODE *4.4.4 Ultramertics as nested hierarchies.*

W.l.o.g., we assume that an incoming node $x$ stores no objects; otherwise, $x$ can evoke our INSERTNODE operation as is and then execute PUBLISH($x,k$) for objects $k$ it stores.

There are several operations that need to be performed when a new node $x$ enters the system. First, the node needs to appropriately populate its own publishing table $PT_x$ with entries that are as local as possible. Second, the routing tables of nodes already in the system might also need to be updated, as node $x$ might lie closer than their current entries. Finally, *x* may need to replace several existing local maxima, and obtain entries they store in their publishing tables.

The structure of the routing tables of nodes already in the system can be exploited to perform the above tasks efficiently. This is illustrated in table 2, where the pseudocode of INSERTNODE is given. In this code, we assume that the incoming user can bootstrap to the system by connecting to an existing node *y* that is closest to it, *i.e.. d(x,y) = d(x, N)*. If these nodes are, *e.g.*, set-top boxes in an ISP that has topology information, this information could be delivered to the incoming node by the ISP directly. Nonetheless, assuming such bootstraping is *not* necessary: we show in Section 4.5 how the incoming user can use UHT to discover such a node using only log $^2(N)$ message exchanges.

Using such a bootstrap node, *x* can proceed to populate the *i*-th entry of its routing table ($RT_x(i)$) according to the process POPULATERT outlined in table 2. First, *x* generates a key *k* that shares a prefix of length *i* with *x*. Then, *x* follows the routing path $RP(y,k)$. Upon encountering a node *z* s.t. pfx(z,k) = i (*i.e.*, $z \in _x(i)$), the propagation ceases and *z* placed in $RT_x(i)$; if no such node is encountered, the $RT_x(i)$ remains empty. The locality of the routing path, captured by Corollary 1, will guarantee that $_x(i)$ is not empty, then a proper node will be found by POPULATERT and that, moreover, it will be as close to *x* as possible.

The remaining tasks, namely, updating the routing tables of other nodes and replacing local maximum are performed subsequently. To gain some intuition we introduce the notion of a *pseudo-maximum* of a set w.r.t a key *k*.

Definition 3. *(Pseudo-maximum) Given a key k and any group of nodes B ⊆ N, we say that y ∈ B is a* pseudo-maximum *of B for key k if*

$$\mathrm{pfx}(y,k) = \max\{\mathrm{pfx}(z,k) \mid x \in B\} \qquad (14)$$

Note that the pseudo-maxima in for *k* may not be unique. Moreover, $\max_{\geqslant k}$ will necessarily be a pseudo-maximum of *B.*

We are interested in pseudo-maxima because, as it turns out, they fully characterize the nodes in *N* that need to update their routing tables after the arrival of *x.*

Lemma 3. *Assume that a node x joins the system. For z ∈ N let r = d(z,x) and l = pfx(x,z). To maintain Property 1 after x joins the system, node z needs to update its Routing Table if and only if, before INSERTNODE(x), z was a pseudo-maximum of $B_z(r)$ for key x. Moreover, the only entry z needs to update is $RT_z(l)$.*

PROOF. Assume that *z* is a pseudo-maximum of $B_z(r)$ for key *x* before INSERTNODE(*x*). By definition this means that *l* pfx(z,x) = max{pfx(y,x) | y ∈ $B_z(j)$}. Suppose that $_z(l) = \emptyset$ before the insertion; by Property 1, $RT_z(l) = \perp$. As x belongs to $_z(l)$ to maintain Property 1, x should be placed in n $RT_z(l)$. Suppose that $_z(l) \neq \varnothing$ before INSERTNODE(*x*). Then $RT_z(l) \neq \perp$ by Property 1. In particular, pfx($RT_z(l)$,z) = *l*. This implies that z[*l* + 1]≠$RT_z$[*l* + 1] = x[*l* + 1] and thus pfx($RT_z(l)$,x) > *l*. Since we assumed that *z* was a pseudo-maximum for key *x* in the set $B_z(r)$ before INSERTNODE(*x*), we conclude that $RT_z(l) \notin B_z(r)$. hence, the entry $RT_z(l)$ has to be updated with *x* to preserve Property 1.

Consider now a node *z* that needs to update $RT_z(i)$ with *x*, for some *i*, and that d(x,z) = *r*. Then, as *x* can only be placed in $RT_z(i)$, i = *l*= pfx(z,x). By our hypothesis, after INSERTNODE(*x*), the entry $RT_z(l)$ has to be updated: this means that Property 1 is not valid anymore for $RT_z(l)$, *i. e.,* either $RT_z(l) = \perp$ or $r \equiv d(z,x) < d(z,RT_z(l))$. Suppose that *z* is not a pseudo-maximum for key *x* in $B_z(r)$, *i.e.*, there *exists* y ∈ $B_z(r)$ such that pfx(x,y) > *l*= pfx(x,z). This implies that the *l* + 1-th digit is the first in which *y* and *z* differ, *i.e.*, pfx(y,z) = *l*. Moreover, d(z,y) ≤ *r*, since *y* belongs to $B_z(r)$. These two results imply that y ∈ $_z(l)$ and thus $RT_z(l) \neq \perp$; in fact d(z,$RT_z(l)$) = d(z, $_z(l)$) ≤ d(z,y) ≤ *r*, a contradiction.

Lemma 3 implies that the nodes *z* that need to update their routing tables *can be easily located from the local maxima $m_x(y,r)$, r ≥ 0, of the bootstrap node y*. In particular, all such nodes have pfx(z,x) = pfx($m_x(k,r)$,x). Moreover, by the monotonicity of the routing rule, the routing path from any pseudo-maximum to $m_x(k,r)$ w.r.t. *x* passes only through pseudo-maxima. As a result, once at $m_x(y,r)$, one can locate these maxima by performing a breadth-first search *over the inverse routing tables*, until it reaches a node that is no longer a pseudo-maximum. This is precisely the operation performed by routine INVERSEFIND at each local maximum, as illustrated in Fig. 4.

Our final important observation is that any nodes that cease to be local maxima w.r.t. a certain key *k* will necessarily be among the aforementioned pseudo-maxima. This is a direct consequence of Lemma 1. In short, by Lemma 1, every local maximum is also an exit point. Therefore, a node that does not alter its routing table does not alter its routing and, hence, its maximality will not be affected. Therefore, to find nodes that need to exchange publishing table entries with x it suffices to look at the aforementioned pseudo-maxima.

REMOVENODE(x)

1: for all *y* ∈ $IRT_x$ do

*2 : l ← pfx(x,y), remove x from $RT_y(l)$*

3: pick $z \in \cup_{j>l}RT_x(j)$ s.t. $d(z,x) = d(x, \cup_{j>l}RT_x(j))$

4 : remove z from $RT_x$, set $RT_y(l) ← z$

5: remove x from $IRT_z$, add y to $IRT_z$

6: end for

7: for all $w \in RT_x$ do

8: remove x from $IRT_w$

9: end for

10: for all k s.t. $PT_x(k) \neq \emptyset$ do

11: $w ← IPT_x(k)$, remove x from $PT_w(k)$

12: repeat

13: $r ← d(x,w) - 1$, $y ← \max_{\geqslant k}IRT_x B_x(r)$

14: if $w \neq \perp$ then

15: $IPT_y(k) ← w$, add y to $PT_w(k)$

16: end if

17: for all $z \in PT_x(k)$ s.t. $d(x,z) \geq d(x,y)$ do

18: if $z \neq y$ then

19: add z to $PT_y(k), IPT_z(k) ← y$

20: end if

21: remove z from $PT_x(k)$

22: end for

23: $w ← y$

24: until $PT_x(k) = \emptyset$

25: end for

Table 2: Peudocode of the REMOVENODE operation.

4.4.5 REMOVENODE *4.4.5 Ultramertics as nested hierarchies.*

Again, w.l.o.g., we assume here that an outgoing node *x* stores no objects; otherwise, it can fist execute UNPUBLISH(*x,k*) for all objects *k* that it stores and then evoke REMOVENODE as outlined below.

Upon the departure of a node *x*, nodes having *x* in their routing table will need to update their entries. Moreover, if *x* served as the local maximum w.r.t. a certain key *k*, it will need to locate the new local maximum w.r.t. *k* and provide it with the entries of its publishing table.

Nodes that need to update their routing tables after *x*'s departure can be immediately obtained by $IRT_x$, the inverse routing table *of x*. The locality of *x*'s routing table (Property 1) implies that, to replace *x*, a nodes from *x*'s routing table can in fact be selected (line 3 of REMOVENODE in Fig. 5). Finally, the new local maxima obtaining *x*'s publishing table entries w.r.t. a key *k* can again be found inside *x*'s inverse routing table; this is a concequence of the monotonicity of the routing rule, as no other node must lie in between these nodes and *x* in their routing path w.r.t. key *k*.

Finding a Bootstrap Node with UHT - *Ultramertics as nested hierarchies.*

In this section, we outline how to obtain the bootstrap node y required by INSERTNODE (*i.e.*, how to implement OBTAINCLOSEST) using UHT. We assume that each node is aware of the sequence of groups (balls) it belongs to. For example, a node entering the network in Fig. 2 would be aware that it belongs, *e.g.*, the groups $A_1 = G_1$, $A_2 = G_1 \cup G_2$, and $A_3 = \cup_{i=1}^4 G_i$. In an ISP, identifying these groups amounts, *e.g.*, to identifying the DSLAM to which the set-top-box is attached, the MAN it belongs to, its ISP, and so forth.

We further assume that groups are assigned identifiers in the space $Z_2^M$, and that every node belonging to a group *G* publishes *G-i.e.*, it declares that it "stores" object *G*. An incoming node belonging to groups $A_1 \sqcup A_2 \sqcup ... \sqcup A_\ell = N$ can locate a node that is as close as possible in the following manner. First, upon entry, it bootstraps to an arbitrary node y. It then issues a LOOKUP(*y,$A_1$*). If that fails, it initiates a LOOKUP(*y,$A_2$*). This process is repeated until a lookup succeeds; the node returned will be as local as possible.

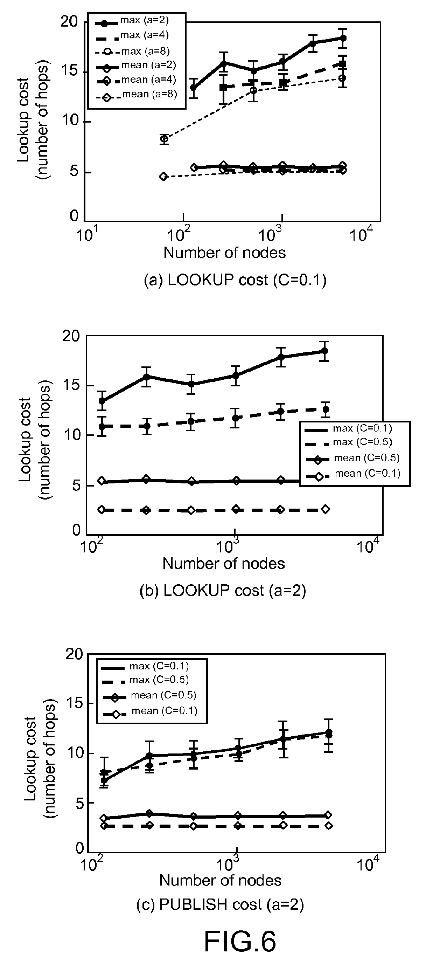

Figure 6: The maximum cost of LOOKUP and PUBLISH operations grows logarithmically with the network size for various branching factors, while the average cost remains constant. (a) Higher branching factors (a = 2, 4, 8) reduce the LOOKUP cost due to fewer backward hops. (b,c) Increasing the fraction of publications (C) also reduces the hop count of a LOOKUP.

Simulations *Ultramertics as nested hierarchies.*

We now present our simulation results. We implemented the algorithms of Section 4.4 using a Peersim simulator in discrete-event mode. We perform simulations using both synthetic and real workloads, the latter derived from BitTorrent traces.

Validation *Ultramertics as nested hierarchies.*

We begin by validating the theoretical results presented in the previous sections.
Simulation setup. We create a network of $N = 2^i$ nodes, for different values of $i$. We use three different branching factors $a = \{2,4,8\}$, where $a$ as in eq. (5). This forms a topology in which nodes are the leaves of a complete binary, 4-ary or 8-ary tree. Unless otherwise noted, all LOOKUP, PUBLISH and UNPUBLISH operations are performed on a single object key.
We generate synthetic traces according to the model described in Section 3.2. At the beginning of the simulation all nodes sequentially join the system, and a fraction $C$ of them chosen at random publishes the object. Then, each node generates lookups according to a Poisson process with rate $\lambda = 0.75\lambda^*$, where

$$\lambda_* = \tilde{C}\mu^{\frac{a-1}{a}}$$

is the value below which the system is in an over-provisioned state (see eq. (7)). After each LOOKUP, the found object is immediately unpublished, and republished after a exponentially distributed time with mean $\mu = 1$ hour. Unless otherwise noted, we use $C = 0.1$ and the simulation length is set so that each node performs around 200 lookups.
LOOKUP and PUBLISH complexity. Figure 6(a) shows the mean and maximum cost (in number of hops) of LOOKUP operations for different network sizes and branching factors. The error bars correspond to the standard deviation across eight simulation runs. The curve shows that the mean cost remains constant with the network size, a consequence of the constant average distance to the exit points, which depends on a and not on $N$. The maximum cost grows logarithmically with the network size, thus validating Theorem 2. Interestingly, the maximum cost decreases for larger values of a. This is due to a lower number of exit points, which in turn translates into a lower number of backward hops after a non-empty exit point is found.
We now vary the fraction of nodes that publish the object. Figure 6(b) shows that increasing $C$ results in fewer hops. Intuitively, a larger number of publications reduces the distance to a non-empty exit point, reducing the hop count of a LOOKUP. This suggests that popular files, which are usually replicated over a large number of nodes, can be looked up in a low number of hops. In other words, the lookup latency for popular content will be low.

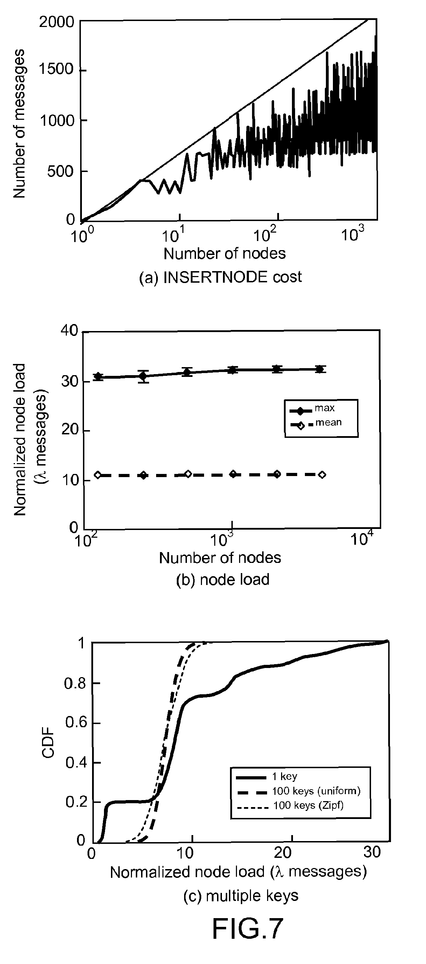

Figure 7: (a) The INSERTNODE cost grows logarithmically with the network size. (b) The message load experienced by the most loaded node (max curve) does not depend on the network size. (c) Increasing the number of keys results in a more balanced node load.
Figure 6(c) shows the results for the PUBLISH cost. The curve shows that a higher $C$ reduces the average hop count, although the decrease is less pronounced than in Figure 6(b). Contrary to lookups, a PUBLISH operation does not follow backward paths, so the impact of $C$ on the total hop count is reduced. The absence of backward hops also explains why the cost of PUBLISH operation is lower than that of a LOOKUP.
INSERTNODE complexity. Figure 7(a) shows the INSERTNODE cost in number of hops, where each node $i$ inserts itself into a network of $i - 1$ nodes. The curve suggests that the maximum insertion cost grows logarithmically (as shown by the straight line), which is better than the poly-logarithmic bound of Theorem 2. That said, the Figure shows that the insertion cost is high for small networks (*e.g.*, an insertion in a network of 10 nodes generates around 500 messages). Indeed, an INSERTNODE operation takes 128 rounds of messages, one for each possible prefix length of a 128-bit key. However, for large networks (*i.e., N* > $10^5$) the insertion cost will be small compared to $N$ given the logarithmic growth. Moreover, as insertions are rare events, the total cost of insertions can be expected to be small with respect to application traffic (*e.g.*, video downloads).
Load distribution. We now look at the load distribution. First, we compute the average load for each node (*i.e., the total messages for that node divided by the simulation time*). Figure 7(b) shows that neither the mean nor the maximum node load depend on the network size, thus validating the $O(1)$ result of Theorem 3.
Second, we study the load when the system contains several keys. We consider 100 unique objects with randomly chosen keys, and assign 50 objects to each node. On each Poisson event, the node selects a key to lookup according to a uniform or Zipf distribution. The latter is taken from our BitTorrent traces, which show Zipfpopularity with an exponent of approximately 0.5. The resulting load distribution is shown in Figure 7(c), where we also plot the load for the single-key configuration used before. The curves show that load balance is improved when using 100 keys, as different keys generate different loads on a given node (which may be, for instance, an exit-point for one key, but not for another). Interestingly, the load for uniform and Zipf popularities are quite similar, probably due to the small Zipf exponent.

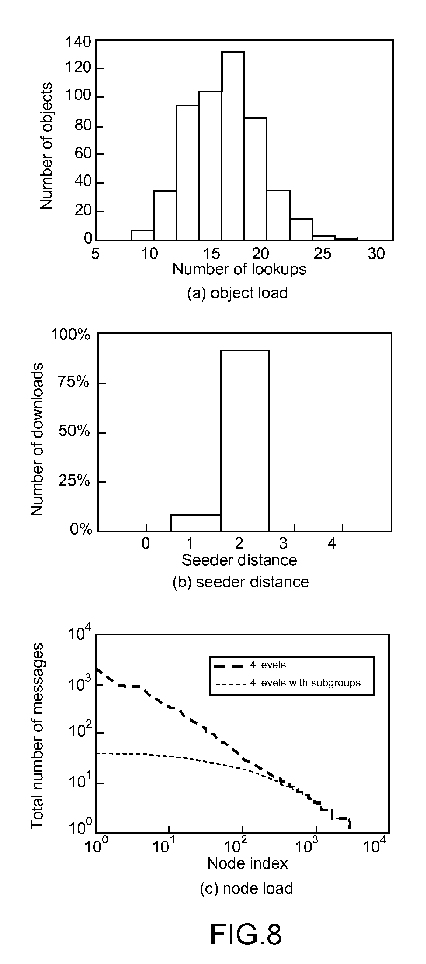

Finally, we consider the load per object, *i.e.,* the number of times an object is accessed. The histogram of Figure 8(a) shows that this load follows a bell-shaped distribution, with most objects accessed between 10 and 20 times. This confirms that the system also achieves good object load balance.

Trace-driven simulations - *Ultramertics as nested hierarchies.*

We now describe our trace-driven simulation results.

Topology and workload. We collected BitTorrent traces of a popular French movie file during two weeks. For this particular file, an IP-to-AS lookup reveals that 75% of the downloaders belong to the top three French ISPs.

Figure 8 show: (a) Almost all objects are found between 10 and 20 times by LOOKUP operations, showing a balanced object load. (b) In trace-driven simulations, an available copy of the file is found at distance 1 or 2 (i.e., within the most local group or the next one in the hierarchy). (c) Load balance improves when large groups are split into logical subgroups.

Since we do not know the ISPs' internal topologies, we make the following simplification. We only consider the top three French ISPs, assuming they have 9000, 4500 and 4500 DSLAMs of 1000 users each[1]. Each ISP has six MANs, one containing 50% of the DSLAMs (representing the Paris area), and the others 10% each. The users observed in our traces (around 5000) are assigned to a randomly chosen DSLAM of the corresponding ISP. We map DSLAMs to level-1 groups, MANs to level-2, and ISPs to level-3 ones.

We use the download start events in the traces as a workload for the following simple P2P application. Each downloader generates a LOOKUP for an idle seeder, which becomes busy for an exponentially distributed time with mean three hours (*i.e.*, the mean download time observed in the traces). Seeders UNPUBLISH the file when busy, and PUBLISH it when idle. Users seed the file during 24 hours after they finish downloading it.

Object distance and node load. For each downloader, we calculate the distance of the idle seeder found by the LOCKUP. The histogram of Figure 8(b) shows that all seeders are at distance 1 or 2, *i.e.,* within the same DSLAM or MAN, resulting in high traffic localization. The small number of seeders at distance 1 is due to most groups containing a single node sharing the file.

The solid curve of Figure 8(c) shows the total message load for each node. Some nodes exhibit a very high load (1000 messages) compared to the average (10 messages). This is due to overloaded level-2 exit-points, as some of them aggregate many level-1 groups (4500 DSLAMs for the biggest MAN). To improve load balance, we introduce an additional level, between levels 1 and 2, which contains groups of 100 DSLAMs each. The resulting load is shown by the dotted curve. The maximum node load is reduced by an order of magnitude. This suggests that in practice it may be necessary to split large groups into smaller logical groups (*i.e.*, which do not reflect physical proximity) in order to achieve acceptable load balance.

Conclusions. *Ultramertics as nested hierarchies.*

Our analysis suggests that exact localized lookups with good load performance can be achieved under ultrametrics. Though these metrics approximate well topological distances of ISPs at low levels of aggregation, at higher levels they might not. Interestingly, under a non-ultrametric distance, UHT still succeeds in retrieving the requested object, though without locality guarantees. Investigating UHT under non-ultrametric distances is thus an interesting open problem.

APPENDIX

A. PROOF OF LEMMA 2 *A. Ultramertics as nested hierarchies.* In this appendix we prove that Properties 1 and 2 remain invariant under the operations supported by UHT. Note that LOOKUP operations do not affect routing tables or publishing tables, nor do they alter the set of nodes storing a given object. Hence Properties 1 and 2 are obviously invariant under such operations. We therefore focus below on the invariance under PUBLISH,UNPUBLISH, INSERTNODE and REMOVENODE operations. We first prove the following auxiliary lemma: Lemma 4. *Consider $z,w \in N$ s.t. $z{\neq}w$ and let $r = d(z,w) > 0$. If $w = m_k(y,r')$ and $z = m_k(y,r'-1)$ for some $r' > 0$ and $y \in N$, then $r' = r$.* PROOF. Note that $d(z,w) \leq \max(d(zy),d(y,w)) \leq r$ so $r \leq r$. Suppose that $r < r$. Then $d(w,y) \leq \max(d(x,y), d(x,y)) \leq r' - 1$ hence $w = m_k(y,r - 1) = z$, a contradiction as $w{\neq}z$. Hence $r = r$._ Combined with Property 2, this lemma implies the following corollary: Corollary 2. *For $z,w \in N$ s.t. $z{\neq}w$ let $r = d(z,w) > 0$. Then $z \in PT_w(k)$ if and only if there exists a $y \in C(k)$ s.t. $w = m_k(y, r)$ and $z = m_k(y, r - 1)$. In other words, the distance $r$ between $w$ and an element $z \in PT_w(k)$ can be used to infer the radii of the balls in which $w$ and $z$ are local maxima w.r.t. to $k$. Moreover, provided that $PT_w(k) \neq \emptyset$, $d(w, IPT_w(k)) = \max\{r: w = m_k(w,r)\} + 1$. (15) Note that eq. (15) holds for the root $w = \max N$ as well by taking $d(w, \perp) = \infty$; indeed, $IPT_w(k) = \perp$ if w is the root and, indeed, the maximum radius for which the root is maximal can be taken to be $\infty$. A.1 Invariance of Property 1 *A.1 Ultramerics as nested hierarchies.* Note that PUBLISH, UNPUBLISH and LOOKUP neither alter the routing tables of nodes nor do they add or remove nodes in $N$, so Property 1 is obviously invariant under these operations. We therefore focus on INSERTNODE and REMOVENODE. *Invariance under* INSERTNODE *operations.* Suppose x is a new node joining the system. We first show that that the routing table of node x indeed satisfies Property 1 after its insertion. Lemma 5. *The routing table of node x satisfies Property 1.* PROOF. For $N$ the set of nodes prior to the insertion of $x$ and $y$ the bootstrap node, let $r_{\min} = d(x,y) = d(x, N)$. Note that, for each $0 \leq i < M$, POPULATERT selects a key $k$ such that pfx$(x,k) = i$ and follows the routing path $KP(x,k)$ until it encounters a node $z$ s.t. pfx$(z,k) = i$. If $C_x(i) = \emptyset$, there is no such node and PoPULATERT terminates at the root, so $RT_x(i) = \perp$ and the property holds. If, on the other hand $C(i) \in \emptyset$, let $z$ be s.t. $r\, d(x,z) = d(x, C_x(i))$. Note that $r \geq r_{\min}$. Then, POPULATERT will terminate no later than when reaching $m_k(x,r) = m_k(z,r)$. This is because $m_k(z,r) \geqslant_k z$ and thus pfx$(x, m_k(x,r)) = i$. Hence, POPULATERT will indeed return a node $z \in C_x(i)$. By Lemma 1, if is selected prior to reaching $m_k(x,r)$, then $z \in B_x(r)$, so it is indeed as local as possible.
_ Recall that, by Lemma 3 of Section 4.4.4, the only nodes that need to update their routing tables are pseudo-maxima w.r.t. key $x$. The following lemma establishes that subroutine INVERSEFIND indeed locates such pseudo-maxima. Lemma 6. *For a given key $k$ and any $y \in N$, let $z = m_k(y,r)$, for some $r \geq 0$, and $I \equiv$ pfx$(z,x)$. Then, the routine* INVERSEFIND *$(z,k,r,I)$ returns all the pseudo-maxima w.r.t. key $k$ in set $B_y(r)$.* PROOF. INVERSEFIND performs a depth-first search over the inverse routing tables of nodes it visits, starting from $z$. The nodes $w$ visited at each step have pfx$(w,x) = I$, are at distance at most $r$ from the previous node visited, and are also smaller than the previous node w.r.t. the $k$-order. The first two properties along with (1) imply that the two nodes w visited have pfx$(w,x) = I$ and $d(w,z) \leq r$, so they are pseudo-maxima of $B_y(r)$. The last property implies that the depth first search terminates. To show that INVERSEFIND returns *all* the pseudo-maxima for key $k$ in set $B_y(r)$, it suffices that, for every pseudo-maximum $w$ there exists a sequence $x_0 = w,...,x_j = z$ such that for all $0 \leq i < j$ (a) $x_{i+1} \in RT_{x_i}$, (b) $X_{i+1} \geqslant_k x_i$, and (c) $x_i \in B_y(r)$. Note that (b) implies that all nodes in this sequence are pseudo-maxima. Indeed, the routing path $RP(x,y)$ is such a sequence. __ The invariance of Property 1 therefore follows. To see this, note that POPULATEPT initiates an INVERSEFIND from every $z = m_x(y,r)$; if $z = m_x(y, r)$ for $r \in [r_1, r_2]$, $r_2$ is used as the argument of INVERSEFIND note that any pseudo-maximum of $B_x(r)$ will necessarily be a pseudomaximum of $B_x(r_2)$. Hence, FINDPSEUDOMAXIMA indeed locates all pseudo-maxima of balls $B_y(r)$ and updates their tables appropriately. *Invariance under* REMOVENODE *operations.* Consider a REMOVENODE$(x)$ operation. Property 1 will remain true for any routing table entry $RT_y(i)$ of any node $y$ such that $RT_y(i) \neq x$ before the departure of $x$. Indeed, if $y(i) = \emptyset$ it will remain so after the departure of $x$. Moreover, if $y \neq \emptyset$ prior to the departure of $x$ and $RT_y(i) \neq x$ then $RT_y(i) \in C_y \backslash \{x\}$. Moreover $d(y, RT_y(i)) = d(y, C_y(i) \backslash \{x\})$, because if $d(y, C_y(i)) > d(y, C_y(i) \backslash \{x\})$ then $x \in C_y(i)$ and $d(y, RT_y(i)) > d(y,x)$, a contradiction as Property 1 holds prior to the departure of $x$. We therefore turn our attention to the routing table entries of nodes $y$ such that $x = RT_y(I)$, for $I =$ pfx$(x,y)$, prior to the departure of $x$. Note that since $x \in RT_y$, then $y$ in $IRT_x$. Hence, REMOVENODE will remove $x$ from $RT_y(I)$ and will replace it with a node $z \in \bigcup_{j>I} RT_x(j)$ s.t. $d(z,x) = d(x, \bigcup_{j>I} RT_x(j))$ (16) We will show that the new $RT_y(I)$ entry satisfies Property 1. Indeed, consider the case where $\bigcup_{j>I} RT_x(j)$ is empty *(i.e., $RT_x(j) = \perp$ for all entries $j > I$)*. Then $RT_y(I) = \perp$. Suppose that $C_y(\ell)$ is non-empty after the departure of $x$. Then there must exist an $x'$ such that pfx$(y,x') = I$ and $x' \neq x$; this can only be true if $I < M-1$. As pfx$(y,x') = I$, this implies that $j =$ pfx$(x,x') > I$ and, therefore, $C_x(j) \neq \emptyset$. Hence, $\bigcup_{j>I} RT_x(j)$ is non-empty, a contradiction. As a result, $C_y(\ell) = \emptyset$ and Property 1 holds. Consider the case where $\bigcup_{j>I} RT_x(j)$ is not empty. Let $d(y,x) = r$ and let $z$ be selected through (16). Then $z \in C_y(I) \backslash \{x\}$ since $z \neq x$, pfx$(z,x) > I$ and, as a result, pfx$(z,y) = I$. Assume that $d(x,z) = r' \leq r$. Then $d(y,z) \leq \max (d(x,y), d(x,z)) = r$. On the other hand $d(y,z) \geq d(y, C_x(I) \backslash \{x\}) \geq d(y, C_x(I)) = r$, so we conclude that $d(y,z) = d(y, C_x(I) \backslash \{x\}) = r$, so Property 1 follows. Assume that $d(x,z) = r' > r$. Suppose that there exists a $z'$ in $C_y(I) \backslash \{x\}$ such that $r'' = d(y,z') < d(y,z) = r'$. Since Property 1 held before the departure of $x$ and $RT_y(I) = x$ we have that $d(y,x) \leq d(y,z') = r''$. Hence $d(z', x) \leq \max(d(z',y), d(y,x)) = r''$. Moreover, since $z' \in C_y(I) \backslash \{x\}$, $I' =$ pfx$(z',x) > I$ and $z' \in C_x(I')$. Hence, by Property 1, $d(x, RT_x(I)) \leq r''$. This is a contradiction, as $z$ is such that $d(z,x) = d(x, \bigcup_{j>I} RT_x(j))$ and $r'' < r$. We therefore conclude that $d(y,z) = d(y, C_y(I) \backslash \{x\})$, and Property 1 again holds. A.2 Invariance of Property 2 *A.2 Invariance under* REMOVENODE *operations. Invariance under* PUBLISH *operations.* Note that PUBLISH and UNPUBLISH operations for a key $k$ do not modify $PT_z(k')$, $z \in N$, or the set $C(k')$ for any $k' \neq k$. We thus fix a key $k$ and consider the effect of these operations on Property 2 only with respect to key $k$. We will write C'(k) for the set C(k) after the operation considered takes place. Consider the operation PUBLISH$(x,k)$. For the "only if" direction, consider $z, y \in N$ s.t. $z \in PT_y(k)$ after the operation. If $z \in PT_y(k)$ before the operation then the r.h.s. of Property 1 still holds. Assume thus that $z \notin PT_y(k)$ before the operation. Then $z$

was added by the PUBLISH operation. By construction, $y = m_k(x,r)$, for some $r \geq 0$. By Corollary $\underline{1}$, exit points are traversed sequentially. Hence, if $r = 0$, then $y = x$, and the node $z$ added to $PT_y(k)$ is $x$, so part (a) of the r.h.s. holds. If $r > 0$, then $z = m_k(x,r-1)\neq y$, and part (b) of the r.h.s. holds. For the "if" direction, observe first that the statement was true for every local maximum $m_k(y,r)$, $y\neq x$, before the operation, so it will remain so after the PUBLISH operation, as no publishing table entries are removed. We thus focus on the maxima $m_k(x,r)$, $r \geq 0$. At the first iteration of the while loop of the pseudocode of PUBLISH, $x$ adds itself to $PT_x(k)$, so part (a) of the r.h.s. indeed implies $x \in PT_x(k)$. Consider that part (b) holds, i.e., let $y,z \in N$ be such that $y = m_k(x,r)$ and $z = m_k(x,r-1)$, for some $r > 0$, and $y\neq z$. If PUBLISH adds $z$ to $PT_y(k)$, then indeed the l.h.s. holds. Assume thus that it does not; this implies that PUBLISH terminated at an exit point $w = m_k(x,r')\neq y$, where $r' < r$ and for which $PT_w(k)\neq\emptyset$ *before* the operation. Since Property $\underline{2}$ held before the operation, there exists an $x'\in(k)$, $x'\neq x$, such that $w = m_k(x',r'')$, $r''\geq 0$. Suppose that $r''\geq r$. Since $w \in B_{x'}(r'')\cap B_x(r'')$, Proposition $\underline{1}$ implies that $B_x(r'') = B_{x'}(r'')$ and thus $m_k(x,r'') = w = m_k(x,r)$, a contradiction as $w\neq y$. Therefore $r'' < r$, which implies that $B_{x'}(r-1) = B_x(r-1)$ and $B_{x'}(r) = B_x(r)$; this in turn implies that $y = m_k(x',r)$ and $z = m_k(x',r-1)$, so by Property $\underline{2}$, $z \in PT_y(k)$ *before* the PUBLISH operation, so it will continue to do so *after* the PUBLISH operation. *Invariance under* UNPUBLISH *operations.* Consider the operation UNPUBLISH(x,k). For the "only if" direction, consider $z,y \in N$ s.t. $z \in PT_y(k)$ after the operation. As UNPUBLISH only removes entries from publishing tables, $z \in PT_y(k)$ before the operation. Hence by Property $\underline{2}$ before the operation either (a) $z = y$ and $y\in C(k)$ or (b) $z\neq y$, and there exist $v\in C(k)$ and $r > 0$ such that $y = m_k(v,r)$ and $z = m_k(v,r-1)$. In the first case, $y\neq x$ as if it were x then UNPUBLISH would remove it from $PT_y(k)$ in the first iteration of the while loop in the pseudocode of UNPUBLISH. Hence (a) still holds after the operation. In the second case, if $v\neq x$, then (b) again holds after the operation. Assume thus that $v=x$, and $y = m_k(x,r)$, $z = m_k(x,r-1)$, for some $r > 0$. Since $z$ was not removed from $PT_y(k)$, UNPUBLISH terminated at some node $w\neq y$ for which $PT_w(k)\neq\emptyset$ after the removal of *m.s.* Consider the case where $w\neq x$ and, hence, $w = m_k(x,r')$ and the node removed from $PT_w(k)$ is $m_k(x,r'-1)$, for some $0 < r' < r$. Since $PT_w(k)\neq\emptyset$ after the removal of this node, there existed a $w'\in PT_w(k)$ before the operation s.t. $w'\neq m_k(x,r'-1)$. If $w' = w$ then $w \in C(k)$, by Property $\underline{2}$. Moreover, since $d(x,w) \leq r' < r$, $m_k(w,r-1) = z$ and $m_k(w,r) = y$, so (b) holds after the operation with $v = w$. If $w'\neq w$ then by Property $\underline{2}$ there existed before the operation an $x'\in C(k)$ s.t. $w = m_k(x',r'')$ and $w' = m_k(x',r''-1)$. If $x' = x$, then $r'' = r'$ and $w' = m_k(x,r'-1)$, a contradiction. Hence, $x'\neq x$. Following the same argument as in the proof of the invariance under PUBLISH operations, we can show that $r'' < r$. As a result, $m_k(x',r) = y$ and $m_k(x',r-1) = z$, so (a) holds after the operation with $v = x'$. The case where $w = x$ can be dealt with in a similar fashion: it can again be established that (a) holds after the operation for some $v \in C(k)\backslash\{x\}$. For the "if" direction, consider a $x'\in C(k)\backslash\{x\}$. By Property $\underline{1}$ $x'\in PT_{x'}(k)$ before the operation, and it will not be removed as Corollary $\underline{1}$ implies that the only node removing itself from its own publishing table is $x$, so (a) indeed implies the l.h.s. For the second case, consider $y,z \in N$ s.t. $y = m_k(x',r)$ and $z = m_k(x',r-1)$, for some $r > 0$, and $z\neq y$. Again, $z \in PT_y(k)$ before the operation. For $z$ to be removed from $PT_y(k)$, $z$ and $y$ must also be local maxima *of x*. For $r' = d(x,x') > 1$, then $y,z$ are local maxima of $x$ only if $r > r'$. However, UNPUBLISH will terminate either before or at $m_k(x,r')$, because $m_k(x',r'-1)\neq(x,r'-1)$, and, by Property $\underline{1}$, both are in $PT_{mk(x,r')}(k)$. Hence, $z$ will remain in $PT_y(k)$, after the UNPUBLISH operation, and the l.h.s. holds. *Invariance under* INSERTNODE *operations.* We start by proving a lemma that plays a role for Property $\underline{2}$ equivalent to the one Lemma $\underline{3}$ played for Property $\underline{1}$. In essence, the following lemma identifies which nodes cease to be local maxima after the arrival of node $x$ and need to update their tables for this reason: Lemma 7. *A node $z$ at distance $r$ from $x$ ceases to be a maxima element for some $y' \in C(k)$ after the arrival of x if and only if prior to the arrival of x (a) z was a pseudomaximum* of $B_z(r)$ w.r.t. key x, (b) $PT_z(k)\neq\emptyset$, (c) $x\succ_k z$ and (d) $d(z,IPT_z(k)) > r$. PROOF. Note that $z$ ceases to be a maximal element for some $y \in C(k)$ if there exists a $r \geq 0$ s.t. $z = m_k(y,r)$, $x >_k z$ and $d(x,y) \leq r$. Indeed, under these (and only these) conditions $z$ ceases to be a local maximum for $B_y(r)$ and $x$ must assume this role. We will show that (a)-(d) are equivalent to the above conditions. For the "only if" direction, assume that there exist a $y' \in C(k)$ and an $r\geq 0$ s.t. $z = m_k(y',r)$, $x\succ_k z$ and $d(x,y')\leq r'$. Then (a) is true by Lemmas $\underline{1}$ and $\underline{3}$: by Lemma $\underline{1}$, $z$ will cease to be a local maximum of a ball if and only if it ceases to be an exit point for that ball, and this will only occur if it changes its routing table; by Lemma $\underline{3}$, the latter implies (a). Condition (b) is implied by Property $\underline{2}$ and condition (c) holds by assumption. Finally, (d) also follows as by ($\underline{15}$), $d(z,IPT_z(k))\geq r'+1>r\geq d(x,y')$ while $d(x,z)\leq\max(d(x,y'),d(y',z))\leq r'$. Note that here we have used the convention that $d(z,\perp) =\infty$, i.e., this holds also is $z$ is root w.r.t. $k$. For the "if" direction, assume that (a)-(d) hold. Obviously, (c) indeed implies that $x \succ_k z$. By Property $\underline{2}$, $PT_z(k)\neq\emptyset$ implies that there exist $y' \in C(k)$ and $r\geq 0$ such that $z = m_k(y',r)$. Suppose that $z$ is not the root w.r.t. $k$, and let $r'' = max\{r' : z = m_k(y',r)\}$. Then, by ($\underline{15}$), $d(z,IPT_z(k)) = r'' + 1$, so by (d) $r'' \geq r$. Hence $d(x,y') \leq \max(d(x,z),d(z,y') \leq \max(r,r'') \leq r''$, so the l.h.s. follows with $r' = r''$. If $z$ is the root and $d(z,IPT_z(k))= \infty$, the l.h.s. again follows with $r' = h$, where $h$ the diameter of the network. __ The above lemma fully characterizes the nodes that cease to be exit-points/local w.r.t. a key $k$ and that need to cede this role to $x$. Note that the conditions (a)-(d) are indeed the conditions checked by INSERTNODE before evoking BECOMENEWMAX. We are now ready to prove the invariance of Property $\underline{2}$ under INSERTNODE operations. For the "if' direction, consider $a\ y'\in C(k)$. Observe first that $y'\in PT_{y'}(k)$ after the INSERTNODE operation. This was true before the INSERTNODE operation. INSERTNODE(x) will not remove $y'$ from $PT_y(k)$: a removal through line $\underline{3}$ of the pseudocode of BECOMENEWMAX cannot occur because $r = d(y',x) > 0$, while a removal through line $\underline{10}$ cannot occur because $IPT_{y'}(k)\neq y'$. Let $z = m_k(y', r')$ and $w = m_k(y',r'\text{-}1)$, where $w\neq z$, for some $r'>0$. Then, $d(z,w) = r'$ by Lemma $\underline{4}$. We consider the following cases. Case 1: $z\neq x$, $w\neq x$. Then $z = m_k(y',r)$, $w = m_k(y',r'\text{-}1)$ before the operation and, hence, $w \in PT_z(k)$ before the operation. We will show that INSERTNODE does not remove $w$ from $PT_z(k)$. Indeed, such a removal could occur only at lines $\underline{3}$ and $\underline{10}$ of the pseudocode of BECOMENEWMAX. The first would require that BECOMENEWMAX is executed with $z$ as an argument, and the second that BECOMENEWMAX is executed with $w$ as an argument. Neither $z$ nor $w$ satisfy the conditions (a)-(d) prior to the arrival of $x$, otherwise they would cease to be local maxima by Lemma $\underline{7}$; as a result, BECOMENEWMAX will never be executed with either as an argument. In particular, even if $z$ is a pseudomaximum w.r.t. key $x$ prior to the arrival of $x$ then either $z\succ_kx$ or $d(z,IPT,(k)) \leq r$. These will remain true by the time $z$ is processed by INSERTNODE, as by then $IPT_z(k)$ will either remain the same or will have become $x$; the same argument applies for $w$. Case 2: $z=x$, $w\neq x$. We will show that $w \in PT_x(k)$ after the INSERTNODE operation. Let $z' = m_k(y',r)$ be the local maximum before the operation. Then conditions (a)-(d) of Lemma $\underline{7}$ hold prior to the arrival of $x$. Moreover, since $z'\succeq_k w$, and $x\neq m_k(y',r'\text{-}1) = w$, it must be that $d(x,y') = r'$, while $r = d(z,x) \leq r'$ by ($\underline{1}$). Consider the case where $z'\neq w$. As in case 1, we can show that since $w$ remains a local maximum, line $\underline{10}$ of INSERTNODE will not be executed with w as an argument. Hence, $w$ will not removed from $PT_z(k)$ through line $\underline{10}$ of INSERTNODE. On the other hand, since $z'$ satisfies conditions (a)-(d) of Lemma $\underline{7}$, BECOMENEWMAX will be executed with $z'$ as an argument. Moreover, $d(w,z')r'\geq r$, so the condition in line $\underline{2}$ of BECOMENEWMAX holds and $w$ is removed from $PT_{z'}(k)$ and added to $PT_x(k)$. Consider now the case where $z' = w$. Then $d(z',IPT_z(k))>r'\geq d(z',x)$ by Lemma $\underline{4}$, so the conditions of line $\underline{10}$ of INSERTNODE hold, and BECOMENEWMAX will be executed with $z' = w$ as an argument. Moreover, the pointer that w contains in $PT_w(k)$ towards $y'$ will be at distance at most $r'\text{-}1$, by Lemma $\underline{4}$, so this pointer will not be removed from $PT_w(k)$; as a result, $PT_w(k)$ will be non-empty at line $\underline{14}$ of BECOMENEWMAX so $w$ will be added to $PT_x(k)$. Case 3: $z\neq x$, $w = x$. Let $w'=m_k(y',r'\text{-}1)$ be the local maximum before the operation. Then $x\succ_k w'$ and $d(x, y') \leq r'\text{-}1$, otherwise $w'$ would continue to be the local maximum after the operation. Moreover, since $x\neq m_k(y',r) = z$, it must be that $z\succ_k x$ and, hence, $z\neq w'$. The above imply that $d(x,w')\leq r'\text{-}1$ and that $d(x,z)=r'=d(w',z)$. As in case 2, by Lemma $\underline{7}$ $w'$ is a pseudomaximum w.r.t. $x$ and will therefore be included in $A$, i.e. the input of INVERSEFIND. Moreover, $d(w',IPTw'(k))=r'>d(x,w')$ so the conditions of line $\underline{10}$ of INSERTNODE hold, and BECOMENEWMAX will be executed with $w'$ as an argument. Since $IPT_{w'}(k)=z\neq\bot$ the condition in line $\underline{9}$ will be met and $x$ will be added to $PT_z(k)$. Finally, as $z\succ_k x$, BECOMENEWMAX cannot be evoked with $z$ as an argument, so $x$ will not be subsequently removed. For the "only if' direction, consider $w,z \in N$ s.t. $w \in PT_z(k)$ after the operation. We consider the following cases. Case 1: $z = w$. Then $z\neq x$, as INSERTNODE never adds $x$ to $PT_x(k)$. Moreover, this implies that $z \in C(k)$ before the operation and, hence, it continues to do so after the operation. Hence the r.h.s. of Property $\underline{2}$ holds. Case 2: $z = x$, $w\neq x$. In this case, $w$ was added by INSERTNODE to the publishing table of $x$. This can occur at lines $\underline{5}$ and $\underline{16}$ of the pseudocode of BECOMENEWMAX. As INSERTNODE does not add $x$ to $PT_x(k)$, it must be that $w\neq x$. Suppose that $w$ was added at line $\underline{5}$ of BECOMENEWMAX. This means that there exists a $z'$ for which the condition in line $\underline{9}$ of INSERTNODE was satisfied. In particular, it satisfied conditions (a)-(d) of Lemma $\underline{7}$: $z'$ was a pseudomaximum w.r.t. key $x$ prior to the insertion of $x$, had a non-empty $PT_z(k)$, it satisfied $x >_k z'$ and $d(z', IPT_z'(k)) > r = d(z',x)$. Moreover, the condition in line $\underline{2}$ of BECOMENEWMAX was satisfied by $w$, i.e., $w\in PT_z(k)$ before the insertion and $d(w,z')\geq r=d(z',x)$. This also implies that $w\neq z'$. Since $w \in PT_{z'}(k)$ prior to the insertion, Property $\underline{2}$ and Lemma $\underline{4}$ imply that there exists a $y'\in C(k)$ and $r' > 0$ such that $z' = m_k(y',r)$, $w = m_k(y',r'\text{-}1)$ and $d(z',w) = r'$. Since $d(w,z') \geq r$, this gives $r'\geq r$. This implies that $d(x,y') \leq r'$; this along with the fact that $x\succ_kz'$ implies that $x = m_k(y',r)$ after the INSERTNODE operation. It thus suffices to show that $w = m_k(y',r\text{-}1)$ remains true after the insertion, so that the r.h.s. of Property $\underline{2}$ holds. Indeed, if $w$ is not a local maximum, then $x$ must be the new local maximum, and $d(w,x)\leq r'\text{-}1$. Thus w must satisfy conditions (a)-(d) of Lemma $\underline{7}$ prior to the arrival of $x$. Moreover, since $d(z',x) \geq r'$ (in fact they are equal as we have shown that $r'\geq r$), as otherwise $d(z',w) \leq r'\text{-}1$, a contradiction as $d(z',w) = r'$. Hence, $w$ will be processed by INSERTNODE before $z'$ and, as it satisfies conditions (a)-(d) of Lemma $\underline{7}$, BECOMENEWMAX would be executed with $w$ as argument, and $w$ would be removed from $PT_z(k)$ by line $\underline{10}$ of BECOMENEWMAX; this is a contradiction however, as we have assumed that $w$ is indeed in $PT_z(k)$ by the time $z'$ is processed by INSERTNODE and added to $PT_x(k)$ by line $\underline{16}$. Hence $w$ indeed remains a local maximum after the arrival of $x$. Suppose now that $w$ was added to $PT_x(k)$ by line $\underline{16}$ of BECOMENEWMAX. Since $PT_w(k)\neq\emptyset$, there exists a $w'\in PT_w(k)$ s.t. $d(w,w') = r'' < d(x,w)$. By Property $\underline{2}$ and Lemma $\underline{4}$, either $w' = w\in C(k)$ or $w'\neq w$ and there exists a $y'\in C(k)$ such that $w = m_k(y',r'')$ and $w' = m(y',r''\text{-}1)$. In either

case, as $d(x,w) > r''$, these remain maxima after the arrival *of x*, so the r.h.s. of Property 2 remains true after the arrival *of x*. Case 3. $z \neq x$, $w = x$. This implies that *x* was added to $PT_z(k)$ by line 11 of BECOMENEWMAX. This in turn implies that BECOMENEWMAX was called with an argument *w'* such that $w' \in PT_z(k)$ and *w'* satisfied conditions (a)-(d) of Lemma 7. Hence, there existed prior to the arrival of *x* a $y' \in C(k)$ s.t. $z = m_k(y',r'+1)$, $w' = m_k(y',r')$, where $d(x,w') \leq r'$ and $d(x,z) = r' + 1$. By Lemma 7, $x = m_k(y',r')$ after its arrival. It thus suffices to show that *z* remains a local maximum after the arrival of *x, i.e., z = $m_k(y',r'+1)$*. As in case 2, it can be shown that if *z* is no longer a local maximum it will be processed by INSERTNODE and BECOMENEWMAX will be evoked with *z* as an argument. Moreover, since $d(z,x) = r'+ 1 > d(w', x)$, *z* will be processed after *w'*, so it will already include *x* in $PT_z(x)$, which would subsequently be removed from *z* by line 3 of BECOMENEWMAX, a contradiction. Hence *z* must remain a local maximum, and the r.h.s. of Property 2 holds. *Invariance under* REMOVENODE *operations.* We first prove the following lemma, that establishes that line 13 in REMOVENODE indeed identifies correctly the new maxima after the departure of x. Lemma 8. *Let $r_{max}$ = max{r : s.t. x = $m_k(x,r)$} and $r_{min}$ = min {r : s.t. $B_x(r)\backslash\{x\} \neq \emptyset$}. Let y be the maximum element w.r.t. the k-order in $B_x(r)\backslash\{x\}$, for some $r_{min} \leq r \leq r_{max}$. Then y = $max \geq_k IRT_x \cap B_x(r)$*. PROOF. Since $r \geq r_{min}$, $B_x(r) \backslash \{x\} \neq \emptyset$. Consider y = $max \geqslant_k B_x(r) \backslash \{x\}$. By Lemma 1, since $y \neq x = m_k(y,r)$, $RR(y,k,r) E B_x(r)$; the monotonicity of the routing rule however implies that $RR(y,k,r) = x$, as no other node in $B_x(r)$ is greater than *y* in the *k* order. Hence, $x \in RT_y$ and, thus, $y \in IRT_x$. The following lemma establishes that the repeat loop in REMOVENODE indeed traverses the new local maxima sequentially. Lemma 9. *At each execution of line 13, variable r is such that $d(x,w) \leq r$ for all* w $\in PT_z(k)$, *variable y = $max_k B_x(r)\backslash\{x\}$ and variable w = $max_k B_x(r+1)$* \{x\}. PROOF. The lemma follows by induction on the iterations of the repeat loop. __ To prove the "only if" direction, consider $w,z$ s.t. w $\in PT_z(k)$ after the REMOVENODE(x) operation. Then $w \neq x$, as *x* is removed by REMOVENODE from all nodes including it in their publishing tables. If $w \in PT_z(k)$ before the operation then, since *x* stores no objects, the r.h.s. of Property 2 still holds after the REMOVENODE operation. Consider thus the case where w was added to $PT_z$ (k) by REMOVENODE. This can occur at lines 15 and 19 of the pseudocode of REMOVENODE. Suppose that w was added by line 15 of REMOVENODE. By Lemma 9, either z = $IPT_x(k)$ and w = $max \geqslant_k(B_x(r_{max})\backslash\{x\})$, or z = $m_k(x,r)$ and w = $m_k(r-1)$, where $PT_x(k) \cap B_x(r-1) \neq \emptyset$. The fact that Property 2 was true before the operation implies that $C(k) \cap (B_x(\{r_{max}\}) \backslash\{x\}$, in the first case, and $C(k) \cap (B_x(r-1) \backslash\{x\}$, in the second case, are non-empty, so the property remains true after the addition of w to z. Suppose that *w* was added by line 19 of REMOVENODE. This means that, prior to the operation, $w \in PT_x(k)$ and therefore there exists a $y' \in C(k)$ s.t. $x = m_k(y,r)$, $w = m_k(y,r-1)$ where $d(w,x) = r$. It suffices to show that $z = m_k(y,r)$ after the departure of *x*; this is indeed true by Lemma 9. For the "if" direction, consider $y \in C(k)$. Then $y \in PT_y(k)$ after the REMOVENODE operation, as REMOVENODE(x) only removes *x* from the publishing tables of other nodes. Let $z,w$ be s.t. $z = m_k(y,r)$, $w = m_k(y,r-1)$ after the REMOVENODE operation, where $r = d(z,w)$. We will show that $w \in PT_z(k)$ after the removal of *x*. If $w \in PT_z(k)$ before the operation, it will continue to do so as, again, REMOVENODE(x) only removes *x* from other nodes' publishing tables. Suppose thus that $w \notin PT_z(k)$. This implies that either w, z or both became local maxima after the removal of *x*; Lemma 9 guarantees that these will be traversed by REMOVENODE and connected, provided that $(B_x(r-1) \backslash \{x\}) \cap C(k)$ is non-empty. Hence, w will be added to $PT_z(k)$, and the r.h.s. of Property 2 follows. B. PROOF OF THEOREM 1 *B. Invariance under* REMOVENODE *operations.* In this appendix we prove that LOOKUP locates the most local copy of the object requested, namely Theorem 1. Let x be a node starting a LOOKUP operation for key *k*. Assume that $c(k) \neq \emptyset$, and let $r = d(x, C(k))$. The following Lemma holds. Lemma 10. *Let $z = m_k(x,r)$. Then z is the first exit-point of node x w.r.t. key k reached by* LOOKUP(x,k) *such that $PT_z(k) \neq \emptyset$*. PROOF. We first prove that $PT_z(k) \neq \emptyset$. Let $y \in C(k)$ such that $d(x,y) = d(x, C(k))$. By the hypothesis, $d(x,y) = r$, and $z = m_k(x,r)$. By (9), $z = m_k(y,r)$. Thus, by Property 2, $PT_z(k) \neq \emptyset$. By Corollary 1, *z* belongs to $NP(x,k)$. Suppose that *z* is not reached by LOOKUP(x,k). Then, there exists a $z' = m_k(x,r')$, $r' < r$, such that $PT_{z'}(k) \neq \emptyset$, and $z \neq z'$, at which LOOKUP(x,k) stops. By Property 2, there exists *a* $y' E C(k)$ such that $z' = m_k(y',r'')$, $r'' \geq 0$. We prove that $r'' < r$. Suppose that $r'' \geq r$: then $z' \in B_x(r'') \cap B_y(r'')$. Proposition 1 implies that $B_x(r'') = B_y(r'')$ and thus $m_k(x,r'') = z' = m_k(y',r'')$, a contradiction as $z' \neq z$. Hence, $r'' < r$. Moreover, by (1), $d(x,y') \leq max \{d(x,z'),d(z',y')\} < r$, a contradiction, since $y' \in C(k)$ and $d(x,C(k)) = r$. Having characterized the node *in RP(x,k)* at which LOOKUP(x,k) stops, we look at the second part of the operation, where the descent of tree of local maxima takes place. Lemma 11. *Consider a $z E B_x(r)$ such that $PT_z(k) \neq \emptyset$ and $z \notin C(k)$. Then, the node z'selected by line 18 of the* LOOKUP *pseudocode (Fig. 3) is such that: (a) $z' E B_x(r)$, and (b) $d(z', C(k)) < d(z,C(k))$*. PROOF. Let $\hat{r} = d(z,C(k))$. Since by the hypothesis $z \in B_x(r)$, and there exists $y \in C(k)$ such that $d(x, y) = r$, by (1) $d(z,y) \leq r$. Hence, $\hat{r} \leq r$. Moreover, since there exists a $y \in C(k)$ such that $d(z,y) = \hat{r}$, by Property 2. there exists $w \in PT_z(k)$, $z \# w$, such that $z = m_k(y,\hat{r})$ and $w = m_k(y,\hat{r}-1)$. Then, $d(z,w) = \hat{r}$ and $d(z,PT_z(k)) \leq \hat{r}$. Consider node z' selected by line 18 of the LOOKUP pseudocode (Fig. 3). By Property 2, there exists a $y \in c(k)$ such that $z = m_k(y,r')$ and $z' = m_k(y,r'-1)$ for some $r' \geq 0$. By definition of $\hat{r}$, $r' \geq \hat{r}$. On the other hand, $d(z,z') = r'$. Since $d(z,z') = d(z,PT_z(k))$, $r' \leq$

$\hat{r}$. Thus, $r' = \hat{r}$ and $d(z',C(k)) = \hat{r} - 1 < \hat{r} = d(z,C(k))$. Moreover, $d(z',x) \leq \max\{d(z',z),d(z,x)\} \leq r$, and $z' \in B_x(r)$. Lemmas 10 and 11 imply Theorem 1. To see this, observe that Lemma 10 implies that forwarding over the routing path terminates at a node $z \in B_x(r)$ such that $PT_z(k) \neq \emptyset$. Now, either $z \in C(k)$, or by Lemma 11, the node $z'$ followed by line 18 of the LOOKUP pseudocode (Fig. 3) will be in $B_x(r)$ and decreases the distance from $C(k)$. By induction, it can be shown that the while loop in line 4 of the LOOKUP pseudocode (Fig. 3) will terminate at a node in $C(k) \cap B_x(r)$. C. PROOF OF THEOREM 2 C. *Invariance under* REMOVENODE *operations.* We prove in this section our result about the complexity of all the operations supported by UHT, namely, Theorem 2. Recall from Definition 3 that a *pseudo-maximum* of a set $B \subseteq N$ w.r.t. key $k$ is a node $y$ s.t. pfx(y,k) = $\max_{z \in B}$pfx(z,k).We need a preliminary result about the number of pseudo-maxima: Lemma 12. *For every* $k \in \kappa$ *and* $B \subseteq N$ *the expected number of pseudo-maxima in B for k is at most 6.* PROOF. Given a key $k \in \kappa$ and $B \subseteq N$, let $N(B)$ be the number of pseudo-maxima in $B$ and $L_{max}$ be the length of the prefix shared between any pseudo-maxima and the key. As the ids are generated by a perfect hashing, we can assume that every bit in every id is either 0 or 1 according to a Bernoulli random variable with parameter $p = 1$ 2. We denote by B the size of $B$. Then, $\mathbb{P}_l(N(B) = n|L_{max}= l) = (B\text{-}1\ n\text{-}1)\ p^{l(n-1)}(1 - p^l)^{B-1-(n-1)}$. Thus we have that

$$\mathbb{E}[X|L_{\max} = l] = (B-1)p^l + 1.$$

On the other hand,

$$\mathbb{P}(L_{\max} = l) = \begin{cases} (1 - p^{l+1})^B - (1 - p^l)^B & \text{if } 0 \leq l < M \\ 1 - (1 - p^M)^B & \text{if } l = M \end{cases}$$

and, thus

$$E[X] = \sum_{l=0}^{M} E[X \mid L_{max} = l] \cdot \mathbb{P}(L_{max} = l)$$

$$= \sum_{l=0}^{M-1}\left((B - 1)p^l + 1\right)\mathbb{P}(L_{max} = l)+$$

$$\left((B - 1)p^M + 1\right)\mathbb{P}(L_{max} = M)$$

$$\leq \sum_{l=0}^{M-1}Bp^l(1 - p^{l+1})^B + 1 + Bp^M$$

Observe that $f(x) = p^x(1 - p^{x+1})^B$ is positive, continuous, and $f(x) < 1$ for all $x \in [0,M\text{-}1]$. Furthermore it has a unique maximum $m = max_{[0,M-1]}$f: hence, it is increasing in interval $[0,m]$ and decreasing in $[m,M-1]$. Hence,

$$E[X] \quad \leq B \int_0^m p^y (1 - p^{y+1})^B dy + Bp^m(1 - p^{m+1})^B$$

$$+ B \int_m^{M-1} p^y (1 - p^{y+1})^B dy + 1 + Bp^M$$

$$\overset{z=1-p^{y+1}}{=} B \int_{(1-p)}^{(1-p_M)} \frac{1}{-p \log p} \cdot z^B dz + 2 + Bp^M$$

$$\overset{p=1/2}{=} 5 + \frac{B}{2^M} \overset{M > \log N > \log B}{\leq} 6$$

By Corollary 1, given any node $x \in N$ and any key $k \in \kappa$, the sequence $\{m_k(x,r)\}$, is a subsequence of the routing path $RP(x,k) = \{x_i\}_i$. Let $i_r$ be such that $x_{ir} = m_k(x,r)$, and $i_{r+1}$ such that $x_{ir+1} = m_k(x,r+1)$. Thus we can define for all $0 \leq r < h$ the quantities $c_r$ as the number of hops in $R\,P(x,k)$ from $x_{ir}$ to $x_{ir+1}$, and write the length of the routing path as $E[|\,R\,P(x,k)|] = \sum_{r=0}^{h-1} Cr$. Lemma 13. *Consider $x_{ir}$ and $x_{ir+1}$ for some $r \geq 0$. Suppose $x_j, x_{j+1} \in R\,P(x,k)$ are such that $pfx(x_j,k) = pfx(x_{j+1},k)$ for some $i_r \leq j \leq i_{r+1}$. Then, $x_j$ and $x_{j+1}$ are pseudo-maxima for key $k$ in $B_x(r+1)$.* PROOF. Let $l = pfx(x_j,k) = pfx(x_{j+1},k)$. Note that $RT_{xj}(l) \notin B_x(r+1)$: if it did, then $RT_{xj}(l)\,E\,RT_{xj}\,S_k(X_j)\,B_x(r+1)\,B$, and $RT_{xj}(l) >_k X_{j+1}$, because $pfx(RT_{xj}(l), x_{j+1}) = l$ and $RT_{xj}(l)[l+1] = k[l+1] \neq x_{j+1}[l+1]$. On the other hand, note that $x_{j+1} = RR(x_j,k,r)$, because $r_j = r$ by (13). Hence, by (12), $x_{j+1} = \max_{\geq_k B \geq_k} RT_{xj}(l)$, a contradiction. Since $RT_{xj}(l) \notin B_x(r+1)$, Proposition 1 implies that $d(x_j, x_{xj}(l)) > r + 1$: hence, there does not exist a node $z \in B_{xj}(r+1) = B_x(r+1)$ such that $pfx(z,k) > l$. Hence, $x_j$ and $x_{j+1}$ are pseudo-maxima. Lemma 13 implies that if a node on the routing path does not improve the prefix shared with the key by at least one bit, this node is a pseudo-maximum. This, along with Lemma 12, immediately implies the following: Lemma 14. *Given any $x\,E\,N$ and every key $k$, the length of the routing path $R\,P\,(x,k)$ is $O(\log N)$ in expectation.* PROOF. Let $N(B)$ be the expected number of pseudo-maxima in a set $B$, that is bounded by 6 (see Lemma 12). We have

$$\mathbb{E}[|\mathcal{RP}(x,k)|] = \sum_{r=0}^{h-1} c_r \leq M + \sum_{r=0}^{h-1} N(B_x(r)) \leq M + 6h.$$

Since we know that $M = \Theta(\log N)$ and $h = O(\log N)$ the thesis follows. The previous Lemma implies that the cost of LOOKUP, PUBLISH and UNPUBLISH operations is $O(\log N)$, since in all these operations the message cost is at most of the order of the length of the routing path. On the other hand, the cost of the INSERTNODE operation can be expressed as the sum of the cost of the three routines POPULATERT, POPULATEPT, BECOMENEWMAX. The cost of POPULATERT is $O(\log^2 N)$, since it creates $M = \Theta(\log N)$ messages that follow at most the routing path. In POPULATEPT a message follows the routing path and it stops to check the pseudo-maxima in each ball; for every pseudo-maximum BECOMENEWMAX exchanges a constant (in N) number of entries in the publishing tables. Since the number of pseudo-maxima is constant, the number of messages exchanged during this phase is a constant. Note that this constant depends on the number of keys; hence, the cost of this routine is $O(\log N \cdot const(K))$. The total cost for an INSERTNODE operation is $O(\log^2 N + \log N \cdot const(K))$. The cost of the REMOVENODE operation is related again to the number of pseudo-maxima in the system. When a node x is removed from the system, all the nodes in its inverse routing table need to be updated (see pseudocode in Fig.5); by the definition of the inverse routing table, all these nodes have the leaving node x in their routing tables. From the way the INSERTNODE is built (see also Lemma 3), we know that these nodes corresponds exactly to the pseudo-maxima in each ball $B_x(r)$, $r \geq 0$, w.r.t. key x. Since we know that in each ball they are constant, the cost of the operation is $O(\log N)$. D. PROOF OF THEOREM 3 D. *Invariance under* REMOVENODE *operations.* In this section we prove Theorem 3: under the assumptions of the NaDa model, the expected message load (in messages per second) at every node x is constant. We recall that we assume in this section that $\kappa = \{k\}$ is a singleton, and we characterize the load related to object $k$. Let $z$ be the root for key $k$. We first characterize the load due to LOOKUP messages. First of all we note that $z$ has the highest load. To see this, note that, by the symmetry of our model, local maxima $m_k(x,r)$, for a given $r$, receive the same expected load due to their role of exit-points of balls of radius $r$. On the other hand, for every $r \geq 0$, the root $z = \max_{\geq_k} B_z(r)$, and therefore occupies all levels of the hierarchy of local maxima.

As a result, the root will incur the highest load in the system. We thus compute the load at the root for $k$, and take it as an upper-bound to the load per node. We divide $N$ in several groups defined as follows: $G_1 = B_z(1)$, and $G_i = B_z(i) \setminus B_z(i - 1)$ for $i \in \{2, ...,h\}$. In other words group $G_i$ is the complement of $B_z(i - 1)$ in the set $B_z(i)$. Note that $U\ G_i = N$, and that $z$ belongs only to $G_1$. Note that every request generated by a node in $G_1$ will reach $z$. Moreover, every request generated by $G_i$, $i > 1$, will reach $z$ if and only if $G_i$ has no available resources. Hence, if $\pi_0^{G_i}$ is the stationary probability that $G_i$ has no available resources, then the load at $z$ due to LOOKUP messages can be written as $L(z) = \lambda_1 + \sum_{i=2}^{h} \lambda_i \pi_0^{G_i}$, where $\lambda_i$, is the rate of requests generated in $G_i$. In the following we will compute upper bounds for $\pi_0^{G_i}$, thus giving us a bound on the load L(z). Let $c(t) \in \mathbb{N}^h$ be an h-dimensional vector describing the number of available objects in each group $G_i$. Whenever a request is generated by a user in $G_i$, $c_i(t) > 0$, the request removes one available object from $G_i$ for an exponentially distributed time of mean 1. Such a request does not generate load on z unless $i = 1$. If, on the other hand, $c_i(t) = 0$, the request will be forwarded to z and will remove an element from at most one $G_j$ (the closest one with available objects.) We will construct a process $\hat{c}(t) \in \mathbb{N}^h$ coupled to $c(t)$, such that $c(t) \geq \hat{c}(t)$ component-wise, for all $t \geq 0$. This process is as follows: • whenever a request is generated by a node in $G_i$ and $c_i(t) > 0$, in $\hat{c}$ a request is forwarded to all $G_j$ such that $j \geq i$, reducing all $\hat{c}_j(t) > 0$ by one; • if, on the other hand $c_i(t) = 0$, in $\hat{c}$ the request is forwarded to all $G_j$, reducing all $\hat{c}_j(t) > 0$ by one. The times for which objects in $\hat{c}(t)$ become unavailable are coupled (whenever possible) to the times that objects in $c(t)$ are unavailable, as follows: • if an object is removed from $G_i$ in $c(t)$, and $\hat{c}_i(t) > 0$, then the object removed from $\hat{c}_i$ becomes available again whenever the corresponding object removed from $c_i$ also becomes available; • objects that become unavailable in $\hat{c}(t)$ remain unavailable for an exponential distributed time with mean 1 and then released to the system. It is possible that, when an object is removed from $c_i(t)$, $\hat{c}_i(t) = 0$; in this case, there exist objects that have been removed from $\hat{c}_i$ and whose unavailability time is not coupled to that of any object in $c_i$. One such object will be then selected and its unavailability time will be coupled to that of the object just removed from $c_i$. Note that, through this coupling, every time an object becomes available in $c_i$, one object also becomes available in $\hat{c}_i$ for all $i$. The following Lemma holds. Lemma 15. *Assume that $\hat{c}(0) = c(0)$. For all $i = 1,...,h$, and for all $t \geq 0$, $\hat{c}_i(t) \leq c_i(t)$. Moreover, $\hat{c}(t)$ is a Markov process.* PROOF. Assuming that $\hat{c}(0) = c(0)$, the fact that $\hat{c}(t) \leq c(t)$ can be shown by induction on the arrival events of requests, as well as the epochs at which objects become unavailable both in $c$ and in $\hat{c}$. To see that $\hat{c}(t)$ is Markovian, observe that the arrivals of requests are Poisson. Moreover, the time for which an object remains unavailable is exponentially distributed with mean one and independent on the other objects. This is obviously true for objects that are either coupled to $c(t)$ from the moment they become unavailable, and for objects that are never coupled to $c(t)$. This is also true for objects whose unavailability time was initially exponentially distributed, and then became coupled to $c(t)$: this fact follows by the memoryless property of the exponential distribution. Moreover, the steady state distribution *of $\hat{c}(t)$ satisfies the following Lemma. Lemma 16. The following holds for the stationary Probabilities of $G_i$ being in state* 0,

i.e., $\hat{\pi}_0^{G_i} = \lim_{t \to \infty} \dfrac{\mathbb{P}(\hat{c}_i(t) = 0)}{t}$ :

$$\hat{\pi}_0^{G_i} \leq \begin{cases} (C_i a)^{h-i} \exp(-C_i a^{h-i} \epsilon^2 / 2) & \text{if } \epsilon \leq \epsilon^* \\ (a-1) \exp(-C_i a^{h-i} \epsilon^2 / 2) & \text{if } \epsilon > \epsilon^*, \end{cases} \tag{17}$$

where $\in^* > 0$, $C_i = C|G_i|$, and a > 1 is a constant defined in (5). PROOF. Let $\hat{\pi}_k^{G_i}$ be the stationary probability of having $k$ available resources in group $G_i$ under the coupled process. Using the equilibrium equations, and the fact that $\hat{\pi}_0^{G_i} \geq \lim_{t \to \infty}$ $\lim_{t \to \infty}$ for all $i$, we obtain:

$$\Lambda_i \hat{\pi}_k^{G_i} + \alpha_i \geq \hat{\pi}_{k-1}^{G_i}(C_i - (k-1)), \tag{18}$$

where $\Lambda_i = \sum_{j=1}^{i} \lambda_j$, and $\alpha_i = \sum_{j=i+1}^{h} \hat{\pi}_0^{G} \lambda_j$.

Summing up to $C_i$ both the side of the inequality, we get an upper bound for the stationary probability of group $G_i$ being empty under the coupled process:

$$\hat{\pi}_0^{G_i} \le \left( 1 + \frac{\alpha_i}{\Lambda_i} \sum_{l=0}^{C_i} \frac{\Lambda_i^l}{l!} \sum_{m=l}^{C_i} \frac{m!}{\Lambda_i^m} \right) E(\Lambda_i, C_i), \qquad (19)$$

where

$$E(\Lambda_i, C_i) = (\Lambda_i^{C_i}/C_i!) / \sum_{l=0}^{C_i - 1} \frac{\Lambda_i^l}{l!}$$

is the Erlang formula, i.e., the blocking probability of an $M/M/C_i/0$ queue with arrival rate $\Lambda_{-i}$ and service time equal to 1. Using the Chernoff bound for the Erlang formula, and investigating the asymptotic behavior of the sum in brackets in (19), we obtain:

$$\hat{\pi}_0^{G_{h-i}} \le \begin{cases} (C_{h-i}a)^z \exp(-C_{h-i}a^z \epsilon^2/2) & \text{if } \epsilon \le \epsilon^* \\ (a-1)\exp(-C_{h-i}a^z \epsilon^2/2) & \text{if } \epsilon > \epsilon^*, \end{cases} \qquad (20)$$

where $\epsilon^* = 1 - \sqrt{3}$. This concludes the proof. At last, we can compute the lookup message load on the root $z$:

$$L_r(z) = \lambda B(1) + \sum_{i=2}^{h} \pi_0^{G_i} \lambda_i \le \lambda B(1) + \sum_{i=2}^{h} \hat{\pi}_0^{G_i} \lambda_i, \qquad (21)$$

where $\hat{\pi}_0^{G_i}$ is bounded by (17). It's not difficult to check that the series in (21) is summable; since by (5) the term $\lambda B(1)$ = $O(1)$, we conclude that the load due to lookup messages at the root is constant. The computation of the load due to PUBLISH and UNPUBLISH operations follows exactly the same guidelines as the LOOKUP load. The root receives a PUBLISH message from a group $G_i$ every time that no object is available in $G_i$ and the first of the $C_i$ unavailable ones is released to the system. The expression of the PUBLISH message load is thus the same as in (21), substituting $\lambda_i$ with $C_i$. On the other hand, the computation of the UNPUBLISH message load involves the quantity $\lambda_i \pi_1^{G_i}$, i.e., an UNPUBLISH message is sent to the root whenever in $G_i$ the last object available is reserved. It can be shown that

$$\pi_1^{G_i} \le \hat{\pi}_1^{G_i} \le \hat{\pi}_0^{G_i} \frac{C_i}{\Lambda_i}.$$

Again we obtain that the unpublish load is bounded by a sum asymptotically constant in N.

## Claims

1. A method of forwarding a message in a system having a plurality nodes aggregated to one another by a hierarchical network, the hierarchical network having a plurality of hierarchical levels, each of the message and the nodes having a respective identifier, in which method a selection is made of a receiving node to which a message from an initiating node is to be forwarded by a forwarding node, the initiating node and the forwarding node being aggregated with one another at a level of aggregation,
   the selection being made by determining

   (i) the similarity between the identifier of the message and the identifier of the receiving node, and,

(ii) whether the receiving node is aggregated with the initiating node and with the forwarding node at the same level of aggregation as that at which the initiating node and the forwarding node are aggregated with each other.

2.  A method as claimed in claim 1, wherein the message contains a data identifier indicating data available for download from one of the nodes, and an identifier for identifying the identity of a node, said identifier of the message being the identifier of the of said data.

3.  A method as claimed in claim 1 or claim 2, including the step of determining which of the nodes at a given level of aggregation has an identifier with the highest level of similarity to that of said message, and of storing, at the so determined node, the identifier for said data in association with the identifier of the node storing the data.

4.  A method as claimed in any of the preceding claims, wherein a determination is made of whether the identifier of said data is more similar to the identifier of the forwarding node than it is to the receiving node.

5.  A method as claimed in any of the preceding claims, wherein determining (ii) is performed by: transmitting a message from the forwarding node to the receiving node, which message is arranged to cause the receiving node to respond with a response; and, determining the elapsed time between the transmission of the message and receipt of the response at the forwarding node.

6.  A method as claimed in any of the preceding claims, wherein the message is forwarded from node to node on a hop-by-hop basis, the initiating node being the node from which the hop terminating at the forwarding node originates.

7.  A method as claimed in any of the preceding claims, wherein the message is forwarded from node to node on a hop-by-hop basis, the initiating node being the node from which the message originates

8.  A method as claimed in any of the preceding claims, wherein each node is logically connected to a plurality of other nodes, each node storing a plurality of identifiers, each respective identifier corresponding to one of the other nodes to which that node is logically connected.

9.  A method as claimed in claim 8, including selecting a plurality of other nodes whose identity is stored at a given node in dependence on the level of aggregation that each of said plurality of nodes has with the given node.

10. A method of routing, from a first node, a lookup message requesting an indication of the location stored data; and, routing, from a second node, a publish message indicating the location of the stored data, the lookup and publish messages being routed along a respective path such that they coincide a third node, each of the lookup message and the publish message being forwarded as claimed in claim 1.

11. A method of introducing a node into a system, which node has a routing table, the routing table being populated by transmitting a message, which message is forwarded as specified in claim 1.

12. A node for use in forwarding messages through a hierarchical network, said node having: an interface for receiving a message from an initiating node in the network, which message has an identifier associated therewith; a memory stage for storing an identifier associated with said node and for storing respective identifiers for a plurality of other nodes; a processing stage arranged in use to select a node from the plurality of other nodes and to cause the interface to forward the received message to the selected node, the processing stage being arranged to make the selection in dependence on (i) the similarity between on the one hand the respective identifier of the message and on the other hand the respective identifiers of at least some of the plurality of other nodes, and, (ii) a determination of whether the receiving node is aggregated with the initiating node and the forwarding node at the same level of aggregation as that at which the initiating node and the forwarding node are aggregated with each other.

13. A node as claimed in claim 12, wherein the plurality of stored identifiers identify a set of other nodes to which the forwarding node is linked.

14. A node as claimed in claim 13, wherein the node has a local identifier and the plurality identifiers stored in respect of other nodes are such that each identifier has a given level of similarity with that of the local identifier, the level of similarity being different for each identifier.

15. A node as claimed in claim 14, wherein for a given level of similarity, the identifier stored corresponds to one of the plurality of other nodes aggregated with said node with the lowest level of aggregation.

FIG.1

FIG.2

FIG.3

FIG.4

$\bullet \varepsilon\ C(k)$

$x \longleftarrow Y \Leftrightarrow \varepsilon\ PT_y(k)$

FIG.5

(a) LOOKUP cost (C=0.1)

(b) LOOKUP cost (a=2)

(c) PUBLISH cost (a=2)

FIG.6

(a) INSERTNODE cost

(b) node load

(c) multiple keys

FIG.7

(a) object load

(b) seeder distance

(c) node load

FIG.8

**EP 2 451 136 A1**

Europäisches Patentamt
European Patent Office
Office européen des brevets

## EUROPEAN SEARCH REPORT

Application Number

EP 10 30 6216

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/066481 A1 (ERICSSON TELEFON AB L M [SE]; WELIN ANNIKKI [SE]; SOUZA VICTOR [SE]) 5 June 2008 (2008-06-05) * the whole document * ----- | 1-15 | INV. H04L29/08 H04L12/56 |
| X | US 2004/047350 A1 (ZHANG ZHENG [US] ET AL) 11 March 2004 (2004-03-11) * the whole document * ----- | 1-15 | |
| A | US 2007/143442 A1 (ZHANG HUI [US] ET AL) 21 June 2007 (2007-06-21) * columns 71,75; figures 1,2 * ----- | 1-15 | |
| A | ION STOICA ET AL: "Chord: A Scalable Peer-to-Peer Lookup Protocol for Internet Applications", IEEE / ACM TRANSACTIONS ON NETWORKING, IEEE / ACM, NEW YORK, NY, US, vol. 11, no. 1, 1 February 2003 (2003-02-01), XP011077215, ISSN: 1063-6692 * the whole document * ----- | 1-15 | TECHNICAL FIELDS SEARCHED (IPC) H04L |
| A | HUANG L ET AL: "Tapestry: A Resilient Global-Scale Overlay for Service Deployment", IEEE JOURNAL ON SELECTED AREAS IN COMMUNICATIONS, IEEE SERVICE CENTER, PISCATAWAY, US, vol. 22, no. 1, 1 January 2004 (2004-01-01), pages 41-53, XP011105200, ISSN: 0733-8716, DOI: DOI:10.1109/JSAC.2003.818784 * the whole document * ----- | 1-15 | |

The present search report has been drawn up for all claims

| Place of search | Date of completion of the search | Examiner |
|---|---|---|
| Munich | 18 April 2011 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

39

**ANNEX TO THE EUROPEAN SEARCH REPORT
ON EUROPEAN PATENT APPLICATION NO.** EP 10 30 6216

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2011

| Patent document cited in search report | | Publication date | Patent family member(s) | | Publication date |
|---|---|---|---|---|---|
| WO 2008066481 | A1 | 05-06-2008 | CN<br>EP<br>US | 101589581 A<br>2087667 A1<br>2010061385 A1 | 25-11-2009<br>12-08-2009<br>11-03-2010 |
| US 2004047350 | A1 | 11-03-2004 | NONE | | |
| US 2007143442 | A1 | 21-06-2007 | NONE | | |

EPO FORM P0459